# EUROPÄISCHE PATENTSCHRIFT

(11) **EP 3 434 534 B1**
(45) Veröffentlichungstag und Bekanntmachung des Hinweises auf die Patenterteilung: **15.07.2020**
(21) Anmeldenummer: 18184684.1
(22) Anmeldetag: 20.07.2018
(51) Int. Cl.: B60R 25/021, B60R 25/023

(54) **SPERRVORRICHTUNG ZUM SPERREN EINES FUNKTIONSWESENTLICHEN BAUTEILS EINES KRAFTFAHRZEUGS UND VERFAHREN ZUM SICHERN EINES SPERRBOLZENS EINER SPERRVORRICHTUNG**
BLOCKING DEVICE FOR BLOCKING AN ESSENTIAL COMPONENT OF A MOTOR VEHICLE AND METHOD FOR SECURING A BLOCKING PIN OF A BLOCKING DEVICE
DISPOSITIF DE BLOCAGE DESTINÉ À BLOQUER UN COMPOSANT ESSENTIEL AU FONCTIONNEMENT D'UN VÉHICULE AUTOMOBILE ET PROCÉDÉ DE FIXATION D'UNE GOUPILLE DE BLOCAGE D'UN DISPOSITIF DE BLOCAGE

(30) Priorität: 26.07.2017 DE 102017116898
(43) Veröffentlichungstag der Anmeldung: 30.01.2019
(73) Patentinhaber: HUF Hülsbeck & Fürst GmbH & Co. KG, 42551 Velbert (DE)
(72) Erfinder: SCHÖPPE, Florian, 85748 Garching (DE)
(74) Vertreter: Bals, Rüdiger

(56) Entgegenhaltungen:
- EP-A1- 1 167 135
- EP-A1- 2 277 749
- EP-A1- 2 842 818
- EP-A1- 2 993 090
- EP-A2- 2 420 416
- WO-A1-2009/074614
- DE-U1- 29 806 390
- JP-A- 2007 177 578

## Beschreibung

Die Erfindung betrifft eine Sperrvorrichtung zum Sperren eines funktionswesentlichen Bauteils eines Kraftfahrzeugs, bspw. einer Lenkspindel oder eines Ganghebels, nach dem Oberbegriff des unabhängigen Vorrichtungsanspruches, und ein Verfahren zum Sichern eines Sperrbolzens einer entsprechenden Sperrvorrichtung nach dem Oberbegriff des unabhängigen Verfahrensanspruchs.

Sperrvorrichtungen für Kraftfahrzeuge sind grundsätzlich bekannt und werden zum Sperren von funktionswesentlichen Bauteilen in Kraftfahrzeugen, wie z. B. von Lenkspindeln oder Ganghebeln, eingesetzt. Solche Sperrvorrichtungen weisen meistens einen ersten Gehäuseteil auf, in welchem ein Sperrbolzen beweglich zwischen einer Verriegelungsposition zum Verriegeln des funktionswesentlichen Bauteils und einer Entriegelungsposition zum Freigeben des funktionswesentlichen Bauteils aufgenommen ist. Oft weisen solche Sperrvorrichtungen einen zweiten Gehäuseteil auf, in welchem Mittel, bspw. ein Schließzylinder, zum Bewegen des Sperrbolzens zwischen der Verriegelungsposition und Entriegelungsposition aufgenommen sind. Dabei wird der Sperrbolzen durch eine Feder aus der Entriegelungsposition in die Verriegelungsposition beaufschlagt. Ferner wird ein Sicherungselement im ersten Gehäuseteil angeordnet, das in einer Eingriffsstellung eine Bewegung des Sperrbolzens verhindert und in einer Rückzugsstellung eine Bewegung des Sperrbolzens freigibt. Das Sicherungselement ist durch eine weitere Feder in der Rückzugsstellung gehalten, wenn der erste Gehäuseteil am zweiten Gehäuseteil angeordnet ist, und durch eine Rückfederung der weiteren Feder in die Eingriffsstellung freigebbar, wenn der erste Gehäuseteil in seiner Anordnung zum zweiten Gehäuseteil verändert wird. Solche Sperrvorrichtungen sind jedoch kompliziert im Aufbau, weisen viele einzelne Bauteile auf und erfordern viel Bauraum.

EP 2 277 749 A1 offenbart eine Vorrichtung zum Sperren eines funktionswesentlichen Bauteils eines Kraftfahrzeugs.

Es ist daher Aufgabe der vorliegenden Erfindung, eine Sperrvorrichtung der vorstehend genannten Art zu verbessern. Insbesondere ist es Aufgabe der Erfindung, eine sichere und zuverlässige Sperrvorrichtung zum Sperren eines funktionswesentlichen Bauteils eines Kraftfahrzeugs, bspw. einer Lenkspindel oder eines Ganghebels, bereitzustellen, die einfach aufgebaut ist, die eine geringe Anzahl an Bauteilen aufweist, die einen reduzierten Bauraum erfordert und die leicht zu montieren ist. Weiterhin ist es Aufgabe der vorliegenden Erfindung, ein Verfahren zum Sichern eines Sperrbolzens einer entsprechenden Sperrvorrichtung bereitzustellen, welches schnell, sicher und zuverlässig eine Arretierung des Sperrbolzens bei Manipulationen der Sperrvorrichtung, insbesondere des ersten und/oder des zweiten Gehäuseteils, ermöglicht.

Die vorliegende Aufgabe wird durch eine Sperrvorrichtung mit den Merkmalen des unabhängigen Vorrichtungsanspruchs, insbesondere aus dem kennzeichnenden Teil gelöst. Ferner wird die erfindungsgemäße Aufgabe durch ein Verfahren zum Sichern eines Sperrbolzens einer entsprechenden Sperrvorrichtung mit den Merkmalen des unabhängigen Verfahrensanspruches, insbesondere aus dem kennzeichnenden Teil, gelöst. In den abhängigen Vorrichtungs- und Verfahrensansprüchen sind bevorzugte Weiterbildungen der Erfindung aufgeführt. Merkmale, die zu den einzelnen Ausführungsformen der erfindungsgemäßen Sperrvorrichtung und des erfindungsgemäßen Verfahrens offenbart werden, können in der Weise miteinander kombiniert werden, dass bzgl. der Offenbarung zu den Ausführungsformen der erfindungsgemäßen Sperrvorrichtung und des erfindungsgemäßen Verfahrens stets wechselseitig Bezug genommen wird bzw. werden kann. Außerdem kann das erfindungsgemäße Verfahren mit der erfindungsgemäßen Sperrvorrichtung durchgeführt werden.

Die Erfindung stellt eine Sperrvorrichtung zum Sperren eines funktionswesentlichen Bauteils eines Kraftfahrzeugs, insbesondere einer Lenkspindel, bereit, die mit einem ersten Gehäuseteil, in welchem ein Sperrbolzen beweglich zwischen einer Verriegelungsposition zum Verriegeln des funktionswesentlichen Bauteils und einer Entriegelungsposition zum Freigeben des funktionswesentlichen Bauteils aufgenommen ist, einem zweiten Gehäuseteil, in welchem Mittel zur Bewegung des Sperrbolzens zwischen der Verriegelungsposition und der Entriegelungsposition aufgenommen sind, einem Sicherungselement, das in einer Eingriffsstellung eine Bewegung des Sperrbolzens verhindert und in einer Rückzugsstellung eine Bewegung des Sperrbolzens freigibt, und einem Federelement ausgeführt ist, welches das Sicherungselement in der Rückzugsstellung mit Hilfe einer federelastischen Vorspannung hält, wenn der erste Gehäuseteil am zweiten Gehäuseteil angeordnet ist, und in die Eingriffsstellung durch eine Rückfederung freigibt, wenn der erste Gehäuseteil in seiner Anordnung zum zweiten Gehäuseteil verändert wird. Hierzu ist es erfindungsgemäß vorgesehen, dass das Federelement direkt oder indirekt am Sperrbolzen abgestützt ist und den Sperrbolzen aus der Entriegelungsposition in die Verriegelungsposition durch die federelastische Vorspannung beaufschlagt.

Unter einem funktionswesentlichen Bauteil eines Kraftfahrzeugs kann im Sinne der Erfindung eine Lenkspindel; Bremspedal oder ein Ganghebel verstanden werden. Mit anderen Worten kann unter einem funktionswesentlichen Bauteil im Sinne der Erfindung ein funktionswesentliches Bauteil einer Lenkung des Kraftfahrzeugs verstanden werden, welches bewegt werden muss, damit das Kraftfahrzeug losfahren kann. Das Federelement im Sinne der Erfindung verfügt über eine integrierte Aufbruchsschutzfunktion und gibt zumindest in einer Situation im Notfallbetrieb der Sperrvorrichtung das Sicherungselement, insbesondere durch Auflösen einer federelastischen Vorspannung, frei, um den Sperrbolzen zu arretieren. Eine Änderung der Anordnung des ersten Gehäuseteils relativ zum zweiten Gehäuseteil kann durch eine Manipulation, einen Aufbruchsversuch und/oder durch ein Trennen des zweiten Gehäuseteils vom ersten Gehäuseteil gebildet sein.

Der Erfindungsgedanke liegt dabei darin, dass ein einziges, kombiniertes Federelement vorgesehen ist, dass zwei wesentliche Funktionen erfüllt, die zuvor durch zwei separate Federelemente realisiert wurden. Das erfindungsgemäße Federelement stützt sich zumindest an zwei Bauteilen der Sperrvorrichtung ab: zum einen am Sperrbolzen, um den Sperrbolzen aus der Entriegelungsposition in die Verriegelungsposition zu beaufschlagen, und zum anderen am Sicherungselement, um das Sicherungselement in einer Rückzugsstellung zu halten, wenn der erste Gehäuseteil am zweiten Gehäuseteil angeordnet ist. Zum Abstützen des Federelements am Sperrbolzen können ein erster Hebelarmabschnitt und zum Abstützen des Federelements am Sicherungselement ein zweiter Hebelarmabschnitt am Federelement ausgebildet sein. Anders ausgedrückt kann das Federelement in Form eines zweiteiligen, insbesondere winkelförmigen bzw. schenkelfederförmigen, Hebels ausgebildet sein, welcher auf einer Lastseite den ersten Hebelarmabschnitt und auf einer Kraftseite den zweiten Hebelarmabschnitt aufweisen kann. Zwischen dem ersten Hebelarmabschnitt und dem zweiten Hebelarmabschnitt kann durch eine Biegespannung eine federelastische Vorspannung aufgebaut werden. Als ein stationärer Abschnitt zu einem der beiden Gehäuseteile, wenn der erste Gehäuseteil am zweiten Gehäuseteil angeordnet ist, kann zwischen dem ersten Hebelarmabschnitt und dem zweiten Hebelarmabschnitt ein Stützabschnitt, bspw. in Form einer gewundenen Drahtfeder, ausgebildet sein. Durch die Wahl einer Anzahl an Windungen am Stützabschnitt kann eine gewünschte Biegekraft eingestellt werden. Durch Abstützen des Federelements, insbesondere des Stützabschnitts, zwischen dem ersten Gehäuseteil und dem zweiten Gehäuseteil werden die Hebelarmabschnitte des Federelements auseinander gezogen und somit eine federelastische Vorspannung im Federelement aufgebaut. Mit anderen Worten wird durch Anordnen des ersten Gehäuseteils am zweiten Gehäuseteil mindestens eine federelastische Vorspannung im erfindungsgemäßen Federelement aufgebaut. Durch eine Änderung einer betriebsgemäßen Anordnung des ersten Gehäuseteils relativ zum zweiten Gehäuseteil kann der stationäre Stützabschnitt des Federelements freigegeben werden, wodurch die federelastische Vorspannung im Federelement abgebaut werden kann. Durch eine Rückfederung des Federelements kann der zweite Hebelarmabschnitt des Federelements in eine Entsicherungsrichtung überführt werden und somit das Sicherungselement freigeben. Das Sicherungselement selbst kann ebenfalls federbelastet aus einer Rückzugsstellung in eine Eingriffsstellung sein, bspw. durch eine separate Sicherungsfeder. Wenn das Federelement das Sicherungselement freigegeben hat, kann das Sicherungselement die Rückzugsstellung verlassen und in eine Eingriffsrichtung in die Eingriffsstellung mit dem Sperrbolzen überführt werden, um den Sperrbolzen zu arretieren. Dabei ist es denkbar, dass ein und dieselbe federelastische Vorspannung sowohl zum Beaufschlagen des Sperrbolzens im Normalbetrieb als auch zum Rückfedern des Federelements bei einem Aufbruchsversuch dient. Zudem ist es denkbar, dass eine weitere federelastische Vorspannung, bspw. durch eine Wechselwirkung des Federelements mit dem Sicherungselement, im Federelement aufgebaut werden kann, um ein sicheres Freigeben des Sicherungselements bei Manipulationen der Sperrvorrichtung zu unterstützen.

Ferner kann im Rahmen der Erfindung bei einer Sperrvorrichtung vorgesehen sein, dass das Federelement in Form einer Rotationsfeder, insbesondere einer Drehfeder, ausgebildet ist, wobei insbesondere das Federelement aus einem Federdraht ausgebildet ist. Unter einer Rotationsfeder im Sinne der Erfindung kann eine Schenkelfeder bzw. eine Torsionsfeder verstanden werden. Ein solches Federelement ist einfach und günstig in der Herstellung und kann vorteilhafte federelastische Eigenschaften bereitstellen. Eine Rotationsfeder ist weiterhin vorteilhaft, um eine federelastische Vorspannung bei einer Winkel-/Drehbewegung zwischen zwei Schenkeln aufzubauen, die sie beim Entspannen wieder abgeben kann. An den Schenkeln der Rotationsfeder können zudem auf eine vorteilhafte Weise zwei Hebelarmabschnitte bzw. zwei Hebel aufgebaut werden, die ein Drehmoment in unterschiedliche Richtungen übertragen können. Durch zwei Schenkel der Rotationsfeder können vorteilhafterweise zwei Funktionen erfüllt werden, nämlich Halten des Sicherungselements und Beaufschlagen des Sperrbolzens mit einer Federkraft. Mithilfe nur einer Rotationsfeder anstatt von zwei separaten Federn für den Sperrbolzen und das Sicherungselement können die Anzahl der Bauteile und der Bauraum der Sperrvorrichtung sowie der Montageaufwand beim Zusammenbau der Sperrvorrichtung reduziert werden.

Weiterhin kann im Rahmen der Erfindung bei einer Sperrvorrichtung vorgesehen sein, dass das Federelement einen, insbesondere abgewinkelten, Kontaktabschnitt aufweist, welcher an einem Anschlagsabschnitt des Sperrbolzens federelastisch zur Auflage kommt, wenn der erste Gehäuseteil am zweiten Gehäuseteil angeordnet ist. Somit kann das Federelement direkt auf den Sperrbolzen einwirken. Der Kontaktabschnitt kann vorteilhaft sein, um eine konstante Schenkellänge bzw. einen konstanten Hebelarm an einem Schenkel, insbesondere an einem ersten Hebelarmabschnitt, des Federelements einzustellen, mit dem das Federelement auf den Sperrbolzen einwirken kann. Durch den Kontaktabschnitt kann somit eine stabile Auflage des Federelements am Sperrbolzen geschaffen werden. Somit kann außerdem eine stabilere Drehmomenteinleitung in den und eine Drehmomentaufnahme von dem Sperrbolzen realisiert werden.

Des Weiteren kann im Rahmen der Erfindung bei einer Sperrvorrichtung vorgesehen sein, dass ein Kontaktabschnitt des Federelements verschiebbar entlang eines Anschlagsabschnitts des Sperrbolzens führbar ist, wenn der Sperrbolzen zwischen der Verriegelungsposition und der Entriegelungsposition bewegt wird. Dadurch kann eine Drehmomentübertragung mit einer Komponente in derselben Richtung ermöglicht werden, entlang welcher sich der Sperrbolzen bewegt. Dadurch kann das Federelement wirkungsvoll auf den Sperrbolzen einwirken.

Zudem kann die Erfindung bei einer Sperrvorrichtung vorsehen, dass das Federelement einen ersten Hebelarmabschnitt aufweist, welcher an einem, vorzugsweise vorsprungartig abstehenden, Stift des Sperrbolzens federelastisch zur Auflage kommt, wenn der erste Gehäuseteil am zweiten Gehäuseteil angeordnet ist. Somit kann das Federelement indirekt auf den Sperrbolzen einwirken. Mit dem Stift am Sperrbolzen kann ein konstanter Drehmomenteinleitungspunkt am Sperrbolzen geschaffen werden. Dadurch kann das Federelement stabil, kippsicher und zuverlässig auf den Sperrbolzen einwirken. Außerdem kann durch den Stift ein Übertragungsglied zwischen dem Federelement und dem Sperrbolzen geschaffen werden, um beim Montieren des Federelements in der Sperrvorrichtung mehr Montagefreiheit zu ermöglichen und den Bauraumanforderungen flexibel zu entsprechen. Der Stift am Sperrbolzen und der Sperrbolzen selbst können als ein monolithisches und/oder materialeinheitliches Bauteil bereitgestellt werden. Eine solche Ausbildung ist einfach und erspart einen zusätzlichen Montageschritt. Andererseits kann der Stift nachträglich am Sperrbolzen montiert werden. Dadurch kann der Einsatz eines erfindungsgemäßen Federelements auf herkömmliche Sperrvorrichtungen erweitert werden. Außerdem ist es im Rahmen der Erfindung denkbar, dass ein Stift des Sperrbolzens verschiebbar entlang eines ersten Hebelarmabschnitts des Federelements führbar ist, wenn der Sperrbolzen zwischen der Verriegelungsposition und der Entriegelungsposition bewegt wird. Dadurch kann der Vorteil erreicht werden, dass das Drehmoment auf den Sperrbolzen mit einem veränderlichen Hebel bereitgestellt werden kann. Dabei kann es aus Sicherheitsgründen vorteilhaft sein, den Sperrbolzen in der Entriegelungsposition mit einer größeren Kraft zu beaufschlagen als in der Verriegelungsposition, um sicherzustellen, dass der Sperrbolzen nach dem Abstellen des Kraftfahrzeugs die Verriegelungsposition sicher erreicht.

Ferner kann im Rahmen der Erfindung bei einer Sperrvorrichtung vorgesehen sein, dass zwischen dem ersten Gehäuseteil und dem zweiten Gehäuseteil eine Sollbruchstelle vorgesehen ist, um bei einer Manipulation des ersten Gehäuseteils und/oder des zweiten Gehäuseteils eine Rückfederung des Federelements zur Freigabe des Sicherungselements zu ermöglichen. Eine unberechtigte Person kann bspw. durch eine Stoßeinwirkung oder ein Schneidwerkzeug versuchen, den zweiten Gehäuseteil abzunehmen, um sich einen Zugang zum Sperrbolzen im ersten Gehäuseteil zu verschaffen. Beim geöffneten ersten Gehäuseteil ist der Sperrbolzen unberechtigten Manipulationen ausgesetzt. Durch die Sollbruchstelle kann jedoch gewährleistet werden, dass der erste Gehäuseteil möglichst an der gleichen Stelle, nämlich der Sollbruchstelle vom zweiten Gehäuseteil entfernt wird. An dieser Sollbruchstelle kann sich das Federelement gegen den ersten Gehäuseteil und/oder gegen den zweiten Gehäuseteil abstützen. So kann sichergestellt werden, dass das Federelement bei einem Aufbruchsversuch freigegeben wird und eine federelastische Vorspannung durch eine Rückfederung abbauen kann. Dadurch kann die Aufbruchsschutzfunktion des Federelements zuverlässig erfüllt werden und der Sperrbolzen bei unberechtigten Manipulationen der Sperrvorrichtung sicher arretiert werden.

Weiterhin kann im Rahmen der Erfindung bei einer Sperrvorrichtung vorgesehen sein, dass am zweiten Gehäuseteil ein Schließzylinder zur Bewegung des Sperrbolzens im ersten Gehäuseteil angeordnet ist, welcher mit einem Schlüssel, vorzugsweise durch Drücken und/oder Drehen, betätigbar ist. Ferner kann ein Mitnehmerelement vorgesehen sein, das ebenfalls als Mittel zur Bewegung des Sperrbolzens dient. Das Mitnehmerelement kann durch Drehung des Schließzylinders bewegt werden, wobei das Mitnehmerelement mit dem Sperrbolzen in Wirkverbindung steht, um diesen bei Drehung des Schließzylinders zwischen der Verriegelungsposition und der Entriegelungsposition zu bewegen.

Des Weiteren kann im Rahmen der Erfindung bei einer Sperrvorrichtung vorgesehen sein, dass am ersten Gehäuseteil eine, bspw. bogenförmige oder kreisförmige, Führungsnut ausgebildet ist, um einen sperrbolzenseitigen Endpunkt des Federelements bei der Bewegung des Sperrbolzens zwischen der Verriegelungsposition und der Entriegelungsposition, vorzugsweise drehbar, zu führen. Dadurch kann die Wirkverbindung zwischen dem Federelement und dem Sperrbolzen stabilisiert werden.

Zudem kann im Rahmen der Erfindung bei einer Sperrvorrichtung vorgesehen sein, dass ein Anschlagabschnitt des Sperrbolzens, an welchem das Federelement federelastisch zur Auflage kommt, schräg zu einer Hubrichtung des Sperrbolzens ausgerichtet ist. Durch die Schräge am Anschlagabschnitt kann eine Drehbewegung des Federelements mit einer Hubbewegung des Sperrbolzens synchronisiert werden, um eine Drehmomentübertragung in jeder Position des Sperrbolzens zwischen der Verriegelungsposition und der Entriegelungsposition zu ermöglichen.

Außerdem kann im Rahmen der Erfindung bei einer Sperrvorrichtung vorgesehen sein, dass der Sperrbolzen mindestens eine, vorzugsweise mehrstufige, Sperrnut aufweist, in die das Sicherungselement in der Eingriffsstellung zur Sperrung des Sperrbolzens verrastbar ist, um eine Bewegung des Sperrbolzens zu verhindern. Dadurch kann das Sicherungselement sicher in der Eingriffsstellung am Sperrbolzen positioniert werden. Dabei ist es denkbar, dass die tiefste Stufe an der, vorzugsweise mehrstufigen, Sperrnut in der Verriegelungsposition des Sperrbolzens gegenüber dem Sicherungselement liegt. Weitere Stufen mit einer Steigung zu einer Außenseite des Sperrbolzens liegen in einer Verriegelungsrichtung des Sperrbolzens zum funktionswesentlichen Bauteil. Sollte der Sperrbolzen bei einem Aufbruchsversuch angehoben werden, so wird das freigegebene Sicherungselement in der Eingriffsstellung mit dem Sperrbolzen in der, vorzugsweise mehrstufigen, Sperrnut die Treppe rauf gegen seine Federbelastung zurückverdrängt. Diese Federbelastung sorgt dann vorteilhafterweise dazu, dass das Sicherungselement in die tiefste Stufe der Sperrnut verdrängt wird und somit der Sperrbolzen zurück in die Verriegelungsposition belastet. Somit kann die Aufbruchssicherung verbessert werden und die Arretierwirkung durch das Sicherungselement zumindest zum Teil durch seine Federbelastung verstärkt werden.

Ferner kann im Rahmen der Erfindung bei einer Sperrvorrichtung vorgesehen sein, dass das Federelement einen sperrbolzenseitigen Endpunkt und einen sicherungselementseitigen Endpunkt aufweist, wobei zwischen dem sperrbolzenseitigen Endpunkt und dem sicherungselementseitigen Endpunkt ein, vorzugsweise zweiseitiger und bevorzugt winkelförmiger, Hebel ausgebildet ist. Dadurch kann der Vorteil erreicht werden, dass zwei funktionale Hebelarmabschnitte am Federelement ausgebildet werden, die eine Einwirkung auf der Sperrbolzen und das Sicherungselement ermöglichen.

Weiterhin kann im Rahmen der Erfindung bei einer Sperrvorrichtung vorgesehen sein, dass der Hebel eine Lastseite im Wesentlichen quer zu einer Hubrichtung des Sperrbolzens aufweist, um eine federelastische Vorspannung auf den Sperrbolzen zu übertragen, und wobei der Hebel eine Kraftseite entlang einer Entsicherungsrichtung aufweist, um bei einer Manipulation des ersten Gehäuseteils und/oder des zweiten Gehäuseteils eine Rückfederung des Federelements zur Freigabe des Sicherungselements zu ermöglichen. Durch die Lastseite, die im Wesentlichen quer zu einer Hubrichtung des Sperrbolzens ausgerichtet ist, kann das Federelement seine Wirkung auf den Sperrbolzen wirkungsvoll übertragen. Durch die Kraftseite, die entlang einer Entsicherungsrichtung ausgerichtet ist, kann die Freigabe des Sicherungselements durch das Federelement sichergestellt werden. Dies geschieht aus dem Grund, dass bei einem Aufbruchsversuch, wenn das Federelement nicht mehr am ersten Gehäuseteil oder am zweiten Gehäuseteil abgestützt ist, es mit seiner Kraftseite in die Entsicherungsrichtung aus dem ersten Gehäuseteil herausfahren kann, um die federelastische Vorspannung abzubauen.

Des Weiteren kann im Rahmen der Erfindung bei einer Sperrvorrichtung vorgesehen sein, dass das Federelement einen ersten Hebelarmabschnitt zum Abstützen einer federelastischen Vorspannung am Sperrbolzen und einen zweiten Hebelarmabschnitt zum Halten des Sicherungselements in der Rückzugsstellung aufweist, wenn der erste Gehäuseteil am zweiten Gehäuseteil angeordnet ist. Durch die zwei Hebelarmabschnitte kann ein multifunktionales Federelement geschaffen werden.

Zudem kann im Rahmen der Erfindung bei einer Sperrvorrichtung vorgesehen sein, dass der erste Hebelarmabschnitt kürzer ausgebildet ist als der zweite Hebelarmabschnitt. Somit kann der Vorteil erreicht werden, dass bei einem gleichen Drehmoment auf der kürzeren Lastseite des Federelements eine relativ hohe Kraft an den Sperrbolzen angelegt werden kann, während auf der Kraftseite des Federelements eine relativ geringe Stützkraft ausreicht, um diese Kraft auszugleichen. Dadurch kann außerdem der Vorteil erreicht werden, dass mit einem kürzeren ersten Hebelarmabschnitt am sperrbolzenseitigen Schenkel des Federelements eine vergrößerte Rückprallkraft bei der Rückfederung des Federelements sichergestellt werden kann. Zudem ist es denkbar, dass das Federelement im vorgespannten Zustand am Sperrbolzen in der Verriegelungsposition einen Schenkelwinkel von ungefähr 90° aufweist. Dadurch kann ermöglicht werden, dass beim Freigeben des Federelements während eines Aufbruchsversuchs die Rückprallkraft am kürzeren ersten Hebelarmabschnitt im Wesentlichen parallel einer Entsicherungsrichtung erzeugt werden kann. Dadurch kann die Rückfederung des Federelements bei einem Aufbruchsversuch noch sicherer realisiert werden.

Ferner kann im Rahmen der Erfindung bei einer Sperrvorrichtung vorgesehen sein, dass ein erster Hebelarmabschnitt des Federelements im Wesentlichen quer zu einer Hubrichtung des Sperrbolzens ausgerichtet ist, wenn sich der Sperrbolzen in der Verriegelungsposition befindet, und unter einem spitzen Winkel zur Hubrichtung des Sperrbolzens, wenn sich der Sperrbolzen in der Entriegelungsposition befindet. Somit kann ermöglicht werden, dass das Drehmoment am ersten Hebelarmabschnitt in der Verriegelungsposition des Sperrbolzens in die Richtung zum zu verriegelnden Bauteil wirkt. Durch Überführen des Sperrbolzens aus der Verriegelungsposition in die Entriegelungsposition werden die Hebelarmabschnitte auseinander gedrückt, wodurch die Federvorspannung vergrößert werden kann. Mit einer Ausrichtung des ersten Hebelarmabschnitts unter einem, wenn auch sehr kleinen, aber dennoch existierenden, spitzen Winkel zur Hubrichtung kann ermöglicht werden, dass immer eine Komponente des Drehmoments oder der Federkraft in die Hubrichtung aus der Entriegelungsposition in die Verriegelungsposition existiert.

Weiterhin kann im Rahmen der Erfindung bei einer Sperrvorrichtung vorgesehen sein, dass ein zweiter Hebelarmabschnitt des Federelements im Wesentlichen entlang der Hubrichtung des Sperrbolzens in einer Aufnahmebohrung im ersten Gehäuseteil aufgenommen ist. Dadurch kann ermöglicht werden, dass das Federelement bei einer Manipulation der Sperrvorrichtung, insbesondere beim Abnehmen des zweiten Gehäuseteils vom ersten Gehäuseteil, sicher aus dem ersten Gehäuse herausspringen kann.

Des Weiteren kann im Rahmen der Erfindung bei einer Sperrvorrichtung vorgesehen sein, dass das Federelement vorgespannt zwischen dem ersten Gehäuseteil und dem zweiten Gehäuseteil aufgenommen ist, wenn der erste Gehäuseteil am zweiten Gehäuseteil angeordnet ist. Dadurch kann sichergestellt werden, dass stets eine ausreichende Federvorspannung im Federelement vorliegt, um eine Rückfederung des Federelements bei einem Aufbruchsversuch zu ermöglichen.

Zudem kann im Rahmen der Erfindung bei einer Sperrvorrichtung vorgesehen sein, dass das Federelement, bevorzugt ein zweiter Hebelarmabschnitt des Federelements, im Wesentlichen linear verschiebbar ist, wenn der erste Gehäuseteil in seiner Anordnung zum zweiten Gehäuseteil verändert wird. Somit kann die Rückfederung des Federelements reibungsarm verlaufen und außerdem ein Herausspringen des Federelements aus dem Eingriff mit dem Sicherungselement sichergestellt werden.

Ferner kann im Rahmen der Erfindung bei einer Sperrvorrichtung vorgesehen sein, dass das Federelement, insbesondere zwischen einem ersten Hebelarmabschnitt und einem zweiten Hebelarmabschnitt, mindestens einen Stützabschnitt aufweist, welcher am ersten Gehäuseteil und/oder am zweiten Gehäuseteil zur Auflage kommt, wenn der erste Gehäuseteil am zweiten Gehäuseteil angeordnet ist, wobei der Stützabschnitt freigegeben wird, wenn der erste Gehäuseteil in seiner Anordnung zum zweiten Gehäuseteil verändert wird. Der Stützabschnitt kann in Form eines Drehkerns einer Schenkelfeder mit mehreren Windungen ausgebildet sein. Durch die Anzahl der Windungen kann dabei stufenweise eine variable Biegekraft an den Hebelarmabschnitten eingestellt werden. Durch die Anordnung des Stützabschnittes zwischen dem ersten Gehäuseteil und dem zweiten Gehäuseteil, vorzugsweise nahe einer Sollbruchstelle zwischen dem ersten Gehäuseteil und dem zweiten Gehäuseteil, kann bei einem Aufbruchsversuch sichergestellt werden, dass dem Federelement der Stützpunkt entzogen wird, sodass die federelastische Vorspannung durch eine Rückfederung abgebaut werden kann.

Weiterhin kann im Rahmen der Erfindung bei einer Sperrvorrichtung vorgesehen sein, dass der erste Gehäuseteil eine Montageöffnung, vorzugsweise in Form eines Montageschlitzes, für das Sicherungselement aufweist, um das Sicherungselement im Wesentlichen quer zu einer Hubrichtung des Sperrbolzens aufzunehmen. Dadurch kann eine einfache Montage des Federelements am ersten Gehäuseteil ermöglicht werden. Die Montageöffnung kann dabei klein gehalten werden und sogar in ungesicherten Sperrvorrichtungen nachträglich eingesetzt werden. Somit können sogar herkömmliche Sperrvorrichtungen auf eine einfache und vorteilhafte Weise mit einem Aufbruchsschutz aufgerüstet werden. Durch die Ausrichtung der Montageöffnung im Wesentlichen quer zu einer Hubrichtung des Sperrbolzens kann eine schnelle sowie sichere Überführung des Sicherungselements aus einer Rückzugsstellung in die Eingriffsstellung gewährleistet werden.

Des Weiteren kann im Rahmen der Erfindung bei einer Sperrvorrichtung vorgesehen sein, dass eine Sicherungsfeder vorgesehen ist, um das Sicherungselement aus der Rückzugsstellung in die Eingriffsstellung im Wesentlichen quer zu einer Hubrichtung zu beaufschlagen. Damit kann die Überführung des Sicherungselements aus der Rückzugsstellung in die Eingriffsstellung unterstützt werden.

Zudem ist es im Rahmen der Erfindung denkbar, dass das Sicherungselement in Form eines Plättchens, vorzugsweise aus Federstahl, ausgebildet ist. Ein solches Sicherungselement ist ein einfaches und kostengünstiges Bauteil und kann einfach, ohne großen Montageaufwand oder großen Bauraumbedarf im ersten Gehäuseteil der Sperrvorrichtung untergebracht werden.

Außerdem kann im Rahmen der Erfindung bei einer Sperrvorrichtung vorgesehen sein, dass am zweiten Gehäuseteil ein separierbares Bauelement angeordnet ist, wobei das separierbare Bauelement vorzugsweise an eine Sollbruchstelle zwischen dem ersten Gehäuseteil und dem zweiten Gehäuseteil angrenzt, und wobei insbesondere das separierbare Bauelement ein elektrisches Schalterelement ist. Der erste und der zweite Gehäuseteil der Sperrvorrichtung können dabei einteilig sein, wobei vorliegend das separierbare Bauteil zum zweiten Gehäuseteil zählt, so dass eine Änderung der Anordnung des zweiten Gehäuseteils relativ zum ersten Gehäuseteil auch oder insbesondere durch eine Manipulation und/oder durch ein Entfernen des separierbaren Bauelements hervorgerufen wird.

Ferner wird die erfindungsgemäße Aufgabe durch ein Verfahren zum Sichern eines Sperrbolzens einer Sperrvorrichtung gelöst, wobei die Sperrvorrichtung wie oben beschrieben ausgebildet und mit folgenden Elemente ausgeführt sein kann: einem ersten Gehäuseteil, in welchem ein Sperrbolzen beweglich zwischen einer Verriegelungsposition zum Verriegeln des funktionswesentlichen Bauteils und einer Entriegelungsposition zum Freigeben des funktionswesentlichen Bauteils aufgenommen ist, einem zweiten Gehäuseteil, in welchem Mittel zur Bewegung des Sperrbolzens zwischen der Verriegelungsposition und der Entriegelungsposition aufgenommen sind, einem Sicherungselement, das in einer Eingriffsstellung eine Bewegung des Sperrbolzens verhindert und in einer Rückzugsstellung eine Bewegung des Sperrbolzens freigibt, und einem Federelement, welches am Sperrbolzen abgestützt ist und den Sperrbolzen aus der Entriegelungsposition in die Verriegelungsposition durch eine federelastische Vorspannung beaufschlagt. Hierzu ist es erfindungsgemäß vorgesehen, dass das Verfahren folgende Schritte aufweist:
a) Ändern einer Anordnung des ersten Gehäuseteils relativ zum zweiten Gehäuseteil,
b) Überführen des Federelements entlang einer Entsicherungsrichtung zum Entsichern des Sicherungselements,
c) Überführen des Sicherungselements entlang einer Eingriffsrichtung aus der Rückzugsstellung in die Eingriffsstellung zum Arretieren des Sperrbolzens.

Mithilfe des erfindungsgemäßen Verfahrens werden die gleichen Vorteile erreicht, die oben in Verbindung mit der erfindungsgemäßen Sperrvorrichtung beschrieben wurden. Zur Vermeidung von Wiederholungen wird vorliegend vollumfänglich darauf Bezug genommen.

Die erfindungsgemäße Sperrvorrichtung kann als Lenkradsperre, Bremshebelsperre oder Ganghebelsperre ausgestaltet sein, um einen sicheren Diebstahlschutz bei einem Fahrzeug zu bewirken. Hierbei kann auch das erfindungsgemäße Verfahren mit der Lenkradsperre, Bremshebelsperre oder Ganghebelsperre durchführbar sein.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist die erfindungsgemäße Sperrvorrichtung in mehreren Ausführungsbeispielen detailliert dargestellt. Es zeigen:
- Fig. 1a: eine Vorderansicht einer erfindungsgemäßen Sperrvorrichtung in einer Verriegelungsposition des Sperrbolzens,
- Fig. 1b: eine Ansicht eines erfindungsgemäßen Federelementes in einer Rückzugsposition,
- Fig. 1c: eine Rückansicht einer erfindungsgemäßen Sperrvorrichtung in einer Verriegelungsposition des Sperrbolzens,
- Fig. 2a: eine Vorderansicht einer erfindungsgemäßen Sperrvorrichtung in einer Entriegelungsposition des Sperrbolzens,
- Fig. 2b: eine Ansicht eines erfindungsgemäßen Federelements in einer Rückzugsposition,
- Fig. 2c: eine Rückansicht einer erfindungsgemäßen Sperrvorrichtung in einer Entriegelungsposition des Sperrbolzens,
- Fig. 3a: eine Vorderansicht einer weiteren möglichen Ausführungsform einer erfindungsgemäßen Sperrvorrichtung in einer Verriegelungsposition des Sperrbolzens,
- Fig. 3b: eine Ansicht einer weiteren möglichen Ausführungsform eines erfindungsgemäßen Federelements in einer Rückzugsposition,
- Fig. 4a: eine Vorderansicht einer weiteren möglichen Ausführungsform einer erfindungsgemäßen Sperrvorrichtung in einer Entriegelungsposition des Sperrbolzens,
- Fig. 4b: eine Ansicht einer weiteren möglichen Ausführungsform eines erfindungsgemäßen Federelements in einer Rückzugsposition,
- Fig. 5a: eine Vorderansicht einer erfindungsgemäßen Sperrvorrichtung in einer Verriegelungsposition des Sperrbolzens im Normalbetrieb der Sperrvorrichtung,
- Fig. 5b: eine Ansicht eines erfindungsgemäßen Federelements in einer Rückzugsposition im Normalbetrieb der Sperrvorrichtung,
- Fig. 5c: eine perspektivische Ansicht einer erfindungsgemäßen Sperrvorrichtung in einer Verriegelungsposition des Sperrbolzens im Normalbetrieb der Sperrvorrichtung,
- Fig. 6a: eine Vorderansicht einer erfindungsgemäßen Sperrvorrichtung in einer Verriegelungsposition des Sperrbolzens bei einer Manipulation der Sperrvorrichtung,
- Fig. 6b: eine Ansicht eines erfindungsgemäßen Federelements in einer Rückzugsposition bei einer Manipulation der Sperrvorrichtung,
- Fig. 6c: eine perspektivische Ansicht einer erfindungsgemäßen Sperrvorrichtung in einer Verriegelungsposition bei einer Manipulation der Sperrvorrichtung,
- Fig. 7a: eine Vorderansicht einer erfindungsgemäßen Sperrvorrichtung in einer Verriegelungsposition des Sperrbolzens bei einer Rückfederung eines erfindungsgemäßen Federelements,
- Fig. 7b: eine Ansicht eines erfindungsgemäßen Federelements bei einer Rückfederung,
- Fig. 7c: eine perspektivische Ansicht einer erfindungsgemäßen Sperrvorrichtung in einer Verriegelungsposition des Sperrbolzens bei einer Rückfederung eines erfindungsgemäßen Federelements,
- Fig. 8a: eine Vorderansicht einer erfindungsgemäßen Sperrvorrichtung in einer Verriegelungsposition des Sperrbolzens bei einem Eingriff eines Sicherungselements in den Sperrbolzen,
- Fig. 8b: eine Ansicht eines erfindungsgemäßen Federelements nach einer Rückfederung und bei einem Eingriff eines Sicherungselements in den Sperrbolzen,
- Fig. 8c: eine perspektivische Ansicht einer erfindungsgemäßen Sperrvorrichtung in einer Verriegelungsposition des Sperrbolzens bei einem Eingriff eines Sicherungselements in den Sperrbolzen,
- Fig. 9a: eine Vorderansicht einer weiteren erfindungsgemäßen Sperrvorrichtung in einer Verriegelungsposition des Sperrbolzens im Normalbetrieb der Sperrvorrichtung,
- Fig. 9b: eine Ansicht eines weiteren erfindungsgemäßen Federelements in einer Rückzugsposition im Normalbetrieb der Sperrvorrichtung,
- Fig. 9c: eine perspektivische Ansicht einer weiteren erfindungsgemäßen Sperrvorrichtung in einer Verriegelungsposition des Sperrbolzens im Normalbetrieb der Sperrvorrichtung,
- Fig. 10a: eine Vorderansicht einer weiteren erfindungsgemäßen Sperrvorrichtung in einer Verriegelungsposition des Sperrbolzens bei einer Manipulation der Sperrvorrichtung,
- Fig. 10b: eine Ansicht eines weiteren erfindungsgemäßen Federelements in einer Rückzugsposition bei einer Manipulation der Sperrvorrichtung,
- Fig. 10c: eine perspektivische Ansicht einer weiteren erfindungsgemäßen Sperrvorrichtung in einer Verriegelungsposition bei einer Manipulation der Sperrvorrichtung,
- Fig. 11a: eine Vorderansicht einer weiteren erfindungsgemäßen Sperrvorrichtung in einer Verriegelungsposition des Sperrbolzens bei einer Rückfederung eines erfindungsgemäßen Federelements,
- Fig. 11b: eine Ansicht eines weiteren erfindungsgemäßen Federelements bei einer Rückfederung,
- Fig. 11c: eine perspektivische Ansicht einer weiteren erfindungsgemäßen Sperrvorrichtung in einer Verriegelungsposition des Sperrbolzens bei einer Rückfederung eines erfindungsgemäßen Federelements,
- Fig. 12a: eine Vorderansicht einer weiteren erfindungsgemäßen Sperrvorrichtung in einer Verriegelungsposition des Sperrbolzens bei einem Eingriff eines Sicherungselements in den Sperrbolzen,
- Fig. 12b: eine Ansicht eines weiteren erfindungsgemäßen Federelements nach einer Rückfederung und bei einem Eingriff eines Sicherungselements in den Sperrbolzen und
- Fig. 12c: eine perspektivische Ansicht einer weiteren erfindungsgemäßen Sperrvorrichtung in einer Verriegelungsposition des Sperrbolzens bei einem Eingriff eines Sicherungselements in den Sperrbolzen.

In den nachfolgenden Figuren werden für die gleichen technischen Merkmale auch von unterschiedlichen Ausführungsbeispielen die identischen Bezugszeichen verwendet.

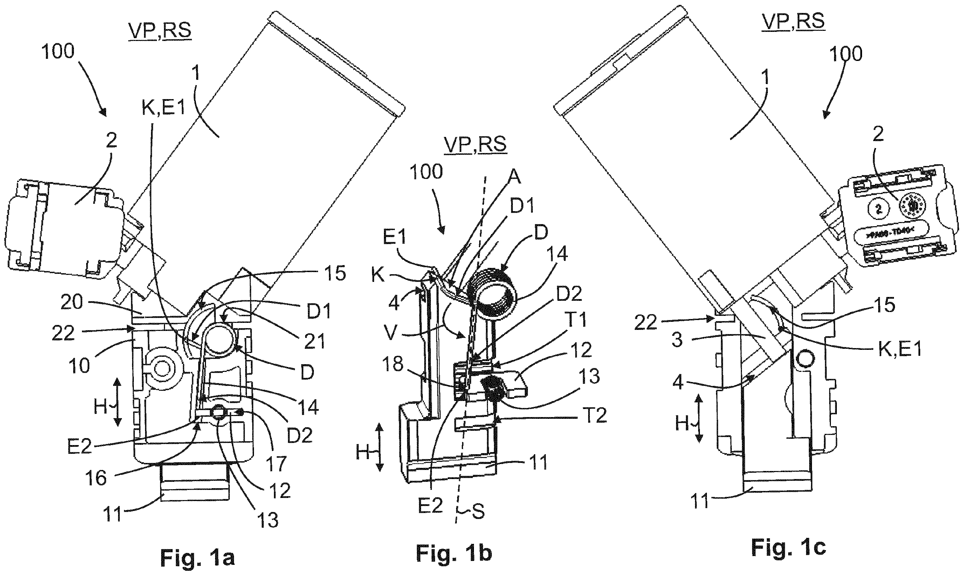

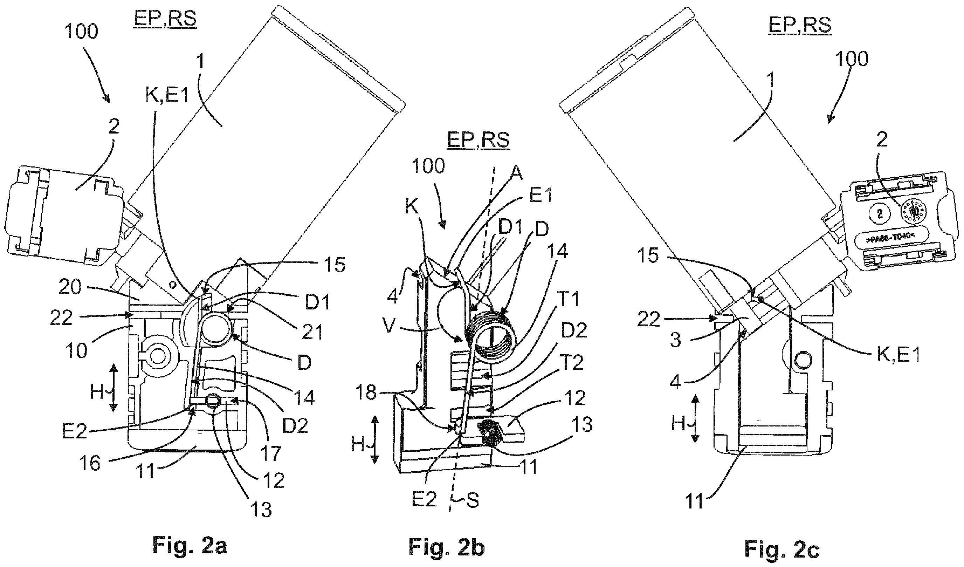

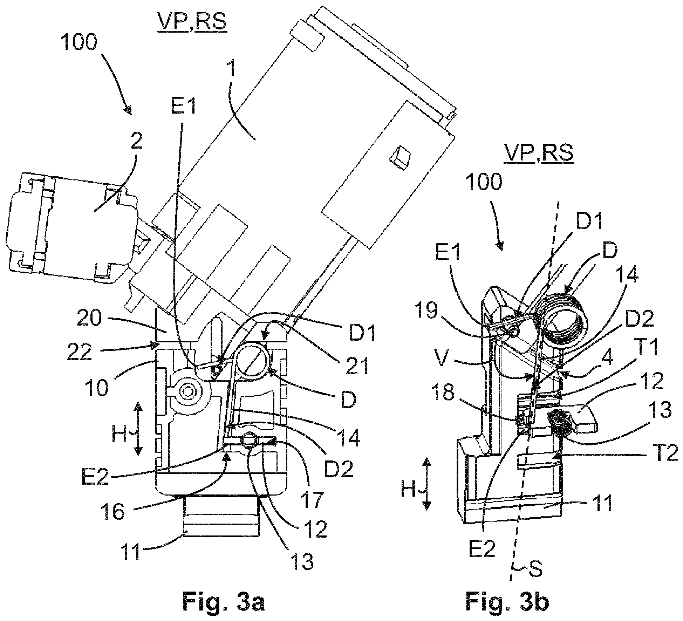

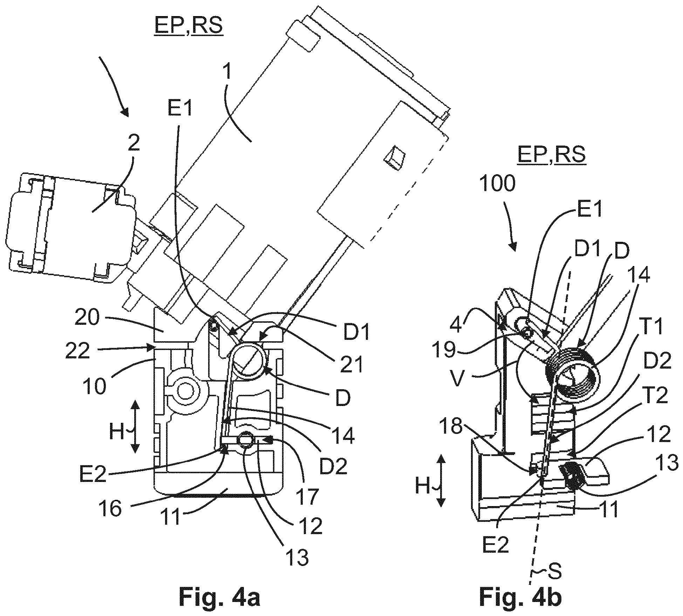

Die Figuren 1a bis 12c zeigen eine erfindungsgemäße Sperrvorrichtung 100 zum Sperren eines funktionswesentlichen Bauteils eines Kraftfahrzeugs, insbesondere einer Lenkspindel. Das funktionswesentliche Bauteil ist in den Figuren aus Einfachheitsgründen nicht dargestellt. Grundsätzlich kann das funktionswesentliche Bauteil jedes Bauteil einer Lenkung des Kraftfahrzeugs darstellen, das bewegt werden muss, damit das Kraftfahrzeug losfahren kann. Die Sperrvorrichtung 100 ist mit einem ersten Gehäuseteil 10 ausgeführt, in welchem ein Sperrbolzen 11 beweglich zwischen einer Verriegelungsposition VP zum Verriegeln des funktionswesentlichen Bauteils (s. die Figuren 1a bis 1c, 3a und 3b) und einer Entriegelungsposition EP zum Freigeben des funktionswesentlichen Bauteils (s. die Figuren 2a bis 2c, 4a und 4b) aufgenommen ist. Zudem umfasst die Sperrvorrichtung 100 einen zweiten Gehäuseteil 20, in welchem Mittel zur Bewegung des Sperrbolzens 11 zwischen der Verriegelungsposition und der Entriegelungsposition aufgenommen sind. Als Mittel zur Bewegung des Sperrbolzens 11 ist beispielhaft ein Schließzylinder 1 gezeigt, welcher mit einem Schlüssel, vorzugsweise durch Drücken und/oder Drehen, betätigbar ist. Zudem ist in der Ansicht der Figuren 1c und 2c ein Mitnehmerelement 3 erkennbar, welches als Übertragungsglied zwischen dem Schließzylinder 1 und dem Sperrbolzen 11 dient, um den Sperrbolzen 11 bei Drehung des Schließzylinders 1 zwischen der Verriegelungsposition VP und der Entriegelungsposition EP zu bewegen. Das Mitnehmerelement 3 greift hierzu in eine Betätigungsführung 4 am Sperrbolzen 11 ein. Zudem ist angrenzend an den Schließzylinder 1 am zweiten Gehäuseteil 20 ein separierbares Bauelement 2 in Form eines elektrischen Schalterelements angeordnet, das in mindestens einer Schlüsselstellung im Schließzylinder 1 betätigt werden kann.

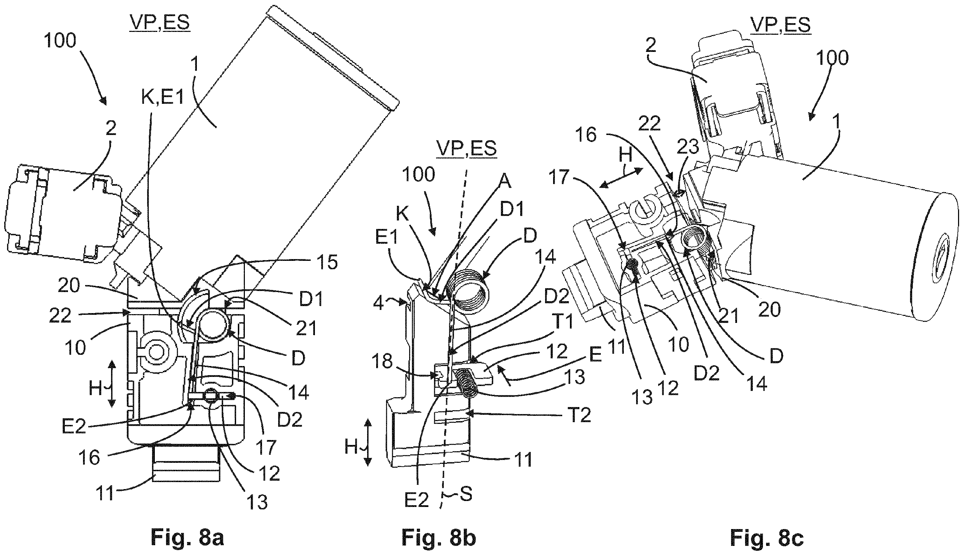

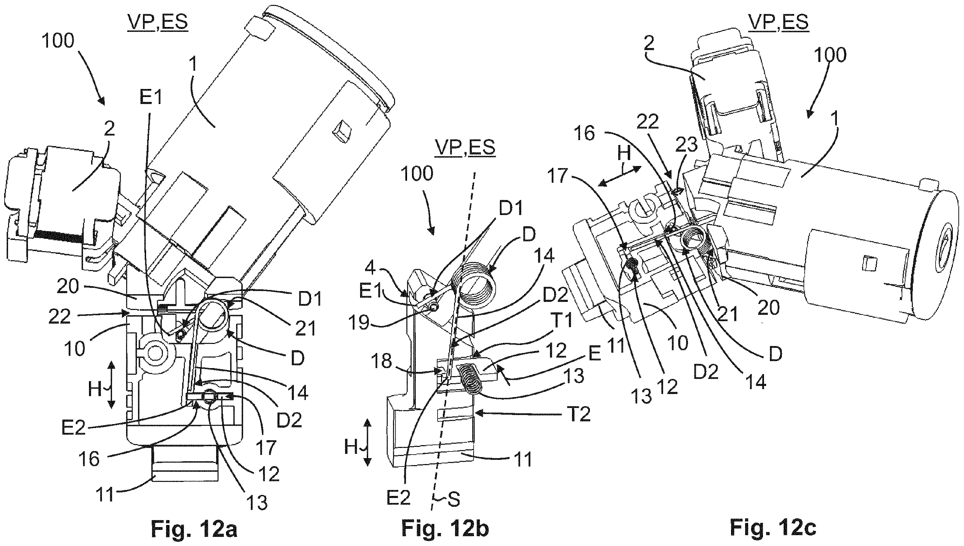

Weiterhin zeigen die Figuren 1a bis 12c ein Sicherungselement 12, bspw. in Form eines Plättchens, das in einer Eingriffsstellung ES eine Bewegung des Sperrbolzens 11 verhindert (s. die Figuren 8a bis 8c und 12a bis 12c) und in einer Rückzugsstellung RS (s. die Figuren 1a bis 4b sowie 5a bis 5c und 9a bis 9c) eine Bewegung des Sperrbolzens 11 freigibt. Das Sicherungselement 12 ist mithilfe einer Sicherungsfeder 13 aus der Rückzugsstellung RS in die Eingriffsstellung ES beaufschlagt.

Wie weiterhin in der Figuren 1a, 2a, 3a und 4a erkennbar ist, weist das erste Gehäuseteil 10 eine Montageöffnung 17 in Form eines Montageschlitzes auf, um das Sicherungselement 12 im Wesentlichen quer zu einer Hubrichtung H des Sperrbolzens 11 aufzunehmen. Dadurch kann eine einfache Montage des Federelements 14 am ersten Gehäuseteil 10 ermöglicht werden. Durch die Ausrichtung der Montageöffnung 17 im Wesentlichen quer zur Hubrichtung H des Sperrbolzens 11 kann eine schnelle sowie sichere Überführung des Sicherungselements 12 aus einer Rückzugsstellung RS in die Eingriffsstellung ES gewährleistet werden.

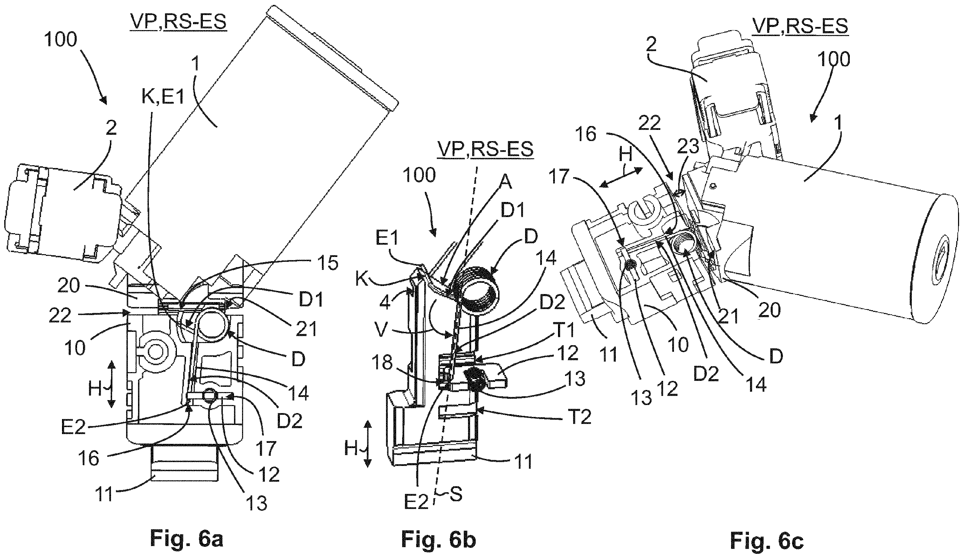

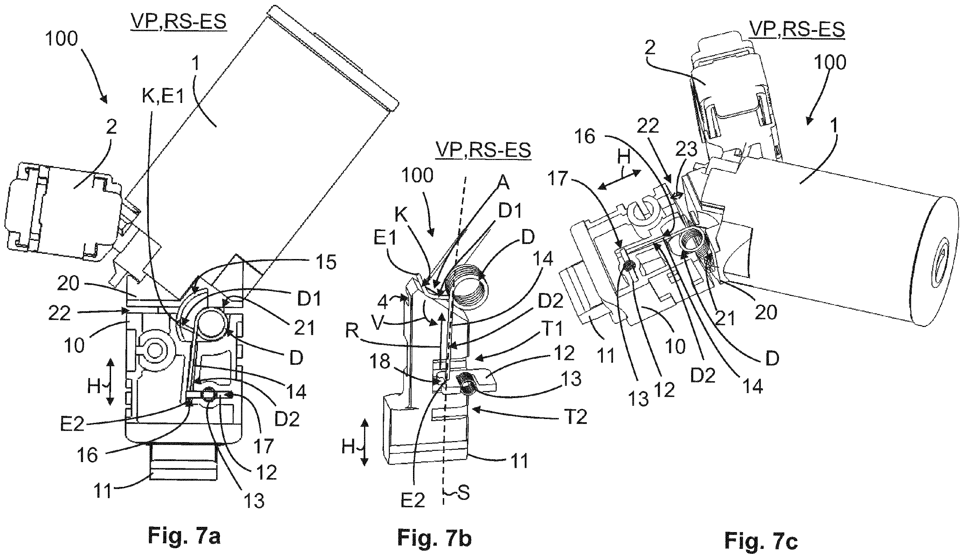

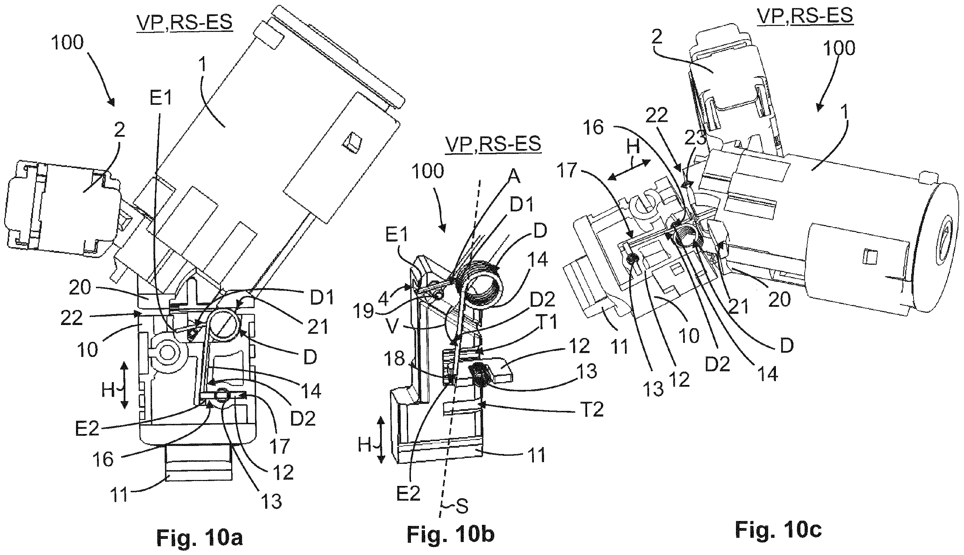

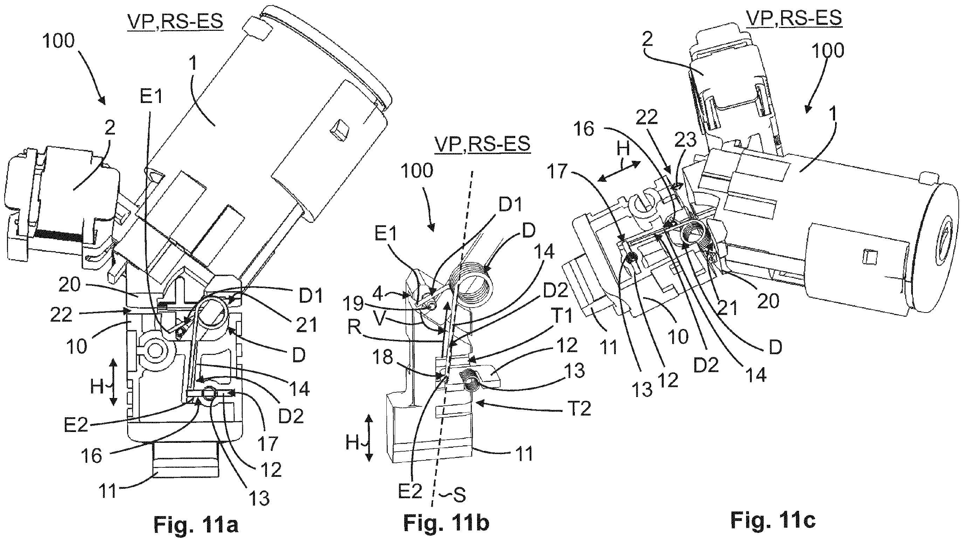

Ferner zeigen die Figuren 1a bis 12c ein Federelement 14, welches das Sicherungselement 12 in der Rückzugsstellung RS mit Hilfe einer federelastischen Vorspannung V hält, wenn der erste Gehäuseteil 10 am zweiten Gehäuseteil 20 angeordnet ist (s. die Figuren 1a bis 4b sowie 5a bis 5c und 9a bis 9c), und in die Eingriffsstellung ES durch eine Rückfederung R freigibt (s. die Figuren 7a bis 7c und 11a bis 11c), wenn der erste Gehäuseteil 10 in seiner Anordnung zum zweiten Gehäuseteil 20 verändert wird (s. die Figuren 6a bis 6c und 10a bis 10c).

Das erfindungsgemäße Federelement 14 ist als ein einziges, kombiniertes Federelement 14 mit einer doppelten Funktion ausgeführt, die bei den bekannten Sperrvorrichtungen zuvor durch zwei separate Federelemente realisiert wurden. Das erfindungsgemäße Federelement 14 stützt sich zumindest an zwei Bauteilen 11, 12 der Sperrvorrichtung 100 ab, nämlich dem Sperrbolzen 11, um den Sperrbolzen 11 aus der Entriegelungsposition EP in die Verriegelungsposition VP zu beaufschlagen, und dem Sicherungselement 12, um das Sicherungselement 12 in der Rückzugsstellung RS zu halten, wenn der erste Gehäuseteil 10 am zweiten Gehäuseteil 20 angeordnet ist (s. die Figuren 1a bis 5c und 9a bis 9c).

Zum Abstützen des Federelements 14 am Sperrbolzen 11 sind ein erster Hebelarmabschnitt D1 und zum Abstützen des Federelements 14 am Sicherungselement 12 ein zweiter Hebelarmabschnitt D2 am Federelement 14 ausgebildet (s. die Figuren 1a bis 12c). Durch die zwei Hebelarmabschnitte D1, D2 wird ein multifunktionales Federelement 14 geschaffen.

Das erfindungsgemäße Federelement 14 kann als eine Rotationsfeder, eine Schenkelfeder bzw. eine Torsionsfeder bezeichnet werden. Ein solches Federelement 14 ist ein einfaches Bauteil, das leicht innerhalb der Sperrvorrichtung 100 verbaut werden kann. Eine solche Rotationsfeder kann eine federelastische Vorspannung V bei einer Winkel-/Drehbewegung zwischen den Hebelarmabschnitten D1, D2 speichern und beim Entspannen wieder abgeben. Das Federelement 14 weist dabei einen sperrbolzenseitigen Endpunkt E1 und einen sicherungselementseitigen Endpunkt E2 auf, wobei zwischen dem sperrbolzenseitigen Endpunkt E1 und dem sicherungselementseitigen Endpunkt E2 ein, vorzugsweise zweiseitiger und bevorzugt winkelförmiger, Hebel ausgebildet ist.

Das Federelement 14 kann im Rahmen der Erfindung direkt (s. die Figuren 1a bis 2c und 5a bis 8c) oder indirekt (s. die Figuren 3a bis 4b und 9a bis 12c) am Sperrbolzen 11 abgestützt sein und den Sperrbolzen 11 aus der Entriegelungsposition EP in die Verriegelungsposition VP durch eine federelastische Vorspannung V beaufschlagen.

Wie es aus den Figuren 1b, 2b, 3b und 4b zu erkennen ist, ist das Federelement 14 in Form eines zweiteiligen, insbesondere winkelförmigen bzw. schenkelfederförmigen, Hebels ausgebildet. Das Federelement 14 weist dabei auf einer Lastseite den ersten Hebelarmabschnitt D1 und auf einer Kraftseite den zweiten Hebelarmabschnitt D2 auf. Zwischen dem ersten Hebelarmabschnitt D1 und dem zweiten Hebelarmabschnitt D2 wird durch Auseinanderdrücken der Hebelarmabschnitte D1, D2 eine federelastische Vorspannung V aufgebaut. Im Normalbetrieb N der Sperrvorrichtung 100, wie es die Figuren 1a bis 4b und die Figuren 5a bis 5c sowie 9a bis 9c zeigen, ist das Federelement 14 vorgespannt zwischen dem ersten Gehäuseteil 10 und dem zweiten Gehäuseteil 20 aufgenommen. Bei Überführen des Sperrbolzens 11 aus der Verriegelungsposition VP (s. die Figuren 1a bis 1c, 3a und 3b) in die Entriegelungsposition EP (s. die Figuren 2a bis 2c, 4a und 4b) können die Hebelarmabschnitte D1, D2 des Federelements 14 noch weiter auseinandergedrückt werden, wodurch in der Entriegelungsposition EP des Sperrbolzens 11 eine höhere federelastische Vorspannung V im Federelement 14 gespeichert werden kann als in der Verriegelungsposition VP des Sperrbolzens 11. Die federelastische Vorspannung V im Federelement 14 wirkt auf den Sperrbolzen 11 aus der Entriegelungsposition EP in die Verriegelungsposition VP, wenn sich die Sperrvorrichtung 100 im Normalbetrieb N befindet (s. die Figuren 1a bis 1c und 3a sowie 3b).

Als ein stationärer Abschnitt des Federelements 14 zu den beiden Gehäuseteilen 10, 20 im Normalbetrieb N der Sperrvorrichtung 100, wenn der erste Gehäuseteil 10 am zweiten Gehäuseteil 20 angeordnet ist, ist ein Stützabschnitt D in Form einer gewundenen Drahtfeder vorgesehen. Durch die Wahl einer Anzahl an Windungen am Stützabschnitt D kann eine gewünschte Biegekraft am Federelement 14 eingestellt werden. Wenn der erste Gehäuseteil 10 am zweiten Gehäuseteil 20 angeordnet ist, ist der Stützabschnitt D des Federelements 14 gegen einen Halteabschnitt 21 am zweiten Gehäuseteil 20 angelehnt, der an eine Sollbruchstelle 22 zwischen dem ersten Gehäuseteil 10 und dem zweiten Gehäuseteil 20 angrenzt. Durch Anordnen des ersten Gehäuseteils 10 am zweiten Gehäuseteil 20 werden die Hebelarmabschnitte D1, D2 des Federelementes 14 etwas auseinander gedrückt, um mindestens eine federelastische Vorspannung V im erfindungsgemäßen Federelement 14 bereitzustellen.

Durch eine Änderung einer betriebsgemäßen Anordnung des zweiten Gehäuseteils 20 relativ zum ersten Gehäuseteil 10 kann der stationäre Stützabschnitt D des Federelements 14 freigegeben werden, wodurch die federelastische Vorspannung V im Federelement 14 durch eine Rückfederung R abgebaut werden kann, wie es im Nachfolgenden mithilfe der Figuren 7a bis 7c und 11a bis 11c gezeigt wird. Durch eine Rückfederung R des Federelements 14 wird der zweite Hebelarmabschnitt D2 aus einer Aufnahmebohrung 16 im ersten Gehäuseteil 10 herausgeschoben. Dies geschieht aus dem Grund, dass der erste Hebelarmabschnitt D1 durch eine Rückprallkraft aufgrund der Rückfederung R des Federelements 14 an den frei gewordenen Stützabschnitt D abgibt, der zusammen mit dem zweiten Hebelarmabschnitt D2 angehoben wird. Der zweite Hebelarmabschnitt D2 kann dadurch eine Halteöffnung 18 am Sicherungselement 12 verlassen und somit das Sicherungselement 12 zum Überführen in die Entsicherungsrichtung S freigeben (s. die Figuren 8a bis 8c sowie 12a bis 12c). Die Sicherungsfeder 13 sorgt dabei dafür, dass das Sicherungselement 12 aus der Rückzugsstellung RS in die Eingriffsstellung ES befördert wird. Dabei ist es denkbar, dass ein und dieselbe federelastische Vorspannung V sowohl zum Beaufschlagen des Sperrbolzens 11 im Normalbetrieb N als auch zum Rückfedern des Federelements 14 in eine Entsicherungsrichtung S bei einem Aufbruchsversuch dient. Zudem ist es denkbar, dass eine weitere federelastische Vorspannung V, bspw. durch eine Wechselwirkung des Federelements 14 mit dem Sicherungselement 12, im Federelement 14 aufgebaut werden kann, um ein sicheres Freigeben des Sicherungselements 12 bei Manipulationen der Sperrvorrichtung 100 zu unterstützen.

Wie es die Figuren 1a bis 12c weiterhin zeigen, kann der, vorzugsweise zweiseitige und bevorzugt winkelförmige, Hebel zwischen dem sperrbolzenseitigen Endpunkt E1 und dem sicherungselementseitigen Endpunkt E2 eine Lastseite im Wesentlichen quer zu einer Hubrichtung H des Sperrbolzens 11 aufweisen, um eine federelastische Vorspannung V auf den Sperrbolzen 11 zu übertragen. Ferner kann der Hebel eine Kraftseite entlang einer Entsicherungsrichtung S aufweisen, um bei einer Manipulation des ersten Gehäuseteils 10 und/oder des zweiten Gehäuseteils 20 eine Rückfederung R des Federelements 14 zur Freigabe des Sicherungselements 12 zu ermöglichen.

Wie es des Weiteren aus den Figuren 1a bis 12c erkennbar ist, kann der erste Hebelarmabschnitt D1 kürzer ausgebildet sein als der zweite Hebelarmabschnitt D2 des Federelements 14. Bei einem gleichen Drehmoment kann somit auf der kürzeren Lastseite des Federelements 14 eine relativ hohe Kraft an den Sperrbolzen 11 angelegt werden, während auf der Kraftseite des Federelements 14 eine relativ geringe Stützkraft ausreichen kann, um diese Kraft aufrechtzuerhalten. Durch den kürzeren ersten Hebelarmabschnitt D1 des Federelements 14 kann außerdem bei einem Aufbruchsversuch eine vergrößerte Rückprallkraft bei der Rückfederung R des Federelements 14 sichergestellt werden.

Ferner zeigen die Figuren 1a bis 1c und 3a sowie 3b, dass der erste Hebelarmabschnitt D1 des Federelements 14 im Wesentlichen quer zu einer Hubrichtung H des Sperrbolzens 11 ausgerichtet sein kann, wenn sich der Sperrbolzen 11 in der Verriegelungsposition VP befindet. Somit wirkt das Drehmoment am ersten Hebelarmabschnitt D1 in der Verriegelungsposition VP des Sperrbolzens im Wesentlichen in die Richtung zum zu verriegelnden Bauteil. Dabei kann das Federelement 14 im vorgespannten Zustand am Sperrbolzen 11 in der Verriegelungsposition VP einen Schenkelwinkel von ungefähr 90° aufweisen.

Zudem zeigen die Figuren 2a bis 2c und 4a sowie 4b, dass der erste Hebelarmabschnitt D1 des Federelements 14 unter einem spitzen Winkel zur Hubrichtung H des Sperrbolzens 11 ausgerichtet sein kann, wenn sich der Sperrbolzen 11 in der Entriegelungsposition EP befindet. Durch Überführen des Sperrbolzens 11 aus der Verriegelungsposition VP in die Entriegelungsposition EP werden die Hebelarmabschnitte D1, D2 des Federelements 14 auseinander gedrückt, wodurch die Federvorspannung V im Federelement 14 vergrößert werden kann. Mit einer Ausrichtung des ersten Hebelarmabschnitts D1 unter einem, wenn auch kleinen, aber dennoch existierenden, spitzen Winkel zur Hubrichtung H des Sperrbolzens 11 kann ermöglicht werden, dass sogar in der Entriegelungsposition EP des Sperrbolzens 11 eine Komponente des Drehmoments in die Hubrichtung H aus der Entriegelungsposition EP in die Verriegelungsposition VP existiert.

In jeder Position VP, EP des Sperrbolzens 11 kann der zweite Hebelarmabschnitt D2 des Federelements 14 im Wesentlichen entlang der Hubrichtung H des Sperrbolzens 11 ausgerichtet sein. Hierzu kann der zweite Hebelarmabschnitt D2 des Federelements 14 in einer Aufnahmebohrung 16 im ersten Gehäuseteil 10 aufgenommen sein, die sich im Wesentlichen entlang der Hubrichtung H des Sperrbolzens 11 erstreckt. Der zweite Hebelarmabschnitt D2 des Federelements 14 ist bei einem Aufbruchsfall im Wesentlichen linear verschiebbar, um ein Herausspringen des Federelements 14 aus dem Eingriff mit dem Sicherungselement 12 sicherzustellen.

Zudem zeigen die Figuren 1a bis 12c, dass die Sperrvorrichtung 100 eine mehrstufige Sperrnut T1 und ggf. eine weitere Sperrnut T2 aufweisen kann. In zumindest einer der Sperrnutten T1, T2 ist das Sicherungselement 12 in der Eingriffsstellung ES zur Sperrung des Sperrbolzens 11 verrastbar, um eine Bewegung des Sperrbolzens 11 zu verhindern. Die mehrstufige Sperrnut T1 kann zum Arretieren des Sperrbolzens 11 in der Verriegelungsposition VP dienen. Die optionale weitere Sperrnut T2 kann zum Arretieren des Sperrbolzens 11 in der Entriegelungsposition EP dienen. Dabei ist es denkbar, dass die tiefste Stufe an dieser mehrstufigen Sperrnut T1 in der Verriegelungsposition VP des Sperrbolzens 11 gegenüber dem Sicherungselement 12 liegt. Weitere Stufen mit einer Steigung zu einer Außenseite des Sperrbolzens 11 liegen in einer Verriegelungsrichtung des Sperrbolzens 11 zum funktionswesentlichen Bauteil. Sollte der Sperrbolzen 11 bei einem Aufbruchsversuch angehoben werden, so wird das freigegebene Sicherungselement 12 in der Eingriffsstellung ES mit dem Sperrbolzen 11 in der mehrstufigen Sperrnut T1 die Treppe rauf gegen seine Federbelastung zurückverdrängt. Dadurch wird das Sicherungselement 12 in die tiefste Stufe der Sperrnut T1 verdrängt und der Sperrbolzen 11 zurück in die Verriegelungsposition VP belastet. Somit kann die Aufbruchssicherung der Sperrvorrichtung 100 verstärkt werden.

Die Figuren 1a bis 1c und 2a bis 2c zeigen eine mögliche Ausführungsform einer Sperrvorrichtung 100 im Sinne der Erfindung. Bei der Sperrvorrichtung 100 weist das Federelement 14 einen, insbesondere abgewinkelten, Kontaktabschnitt K auf, welcher an einem Anschlagabschnitt A des Sperrbolzens 11 federelastisch zur Auflage kommt, wenn der erste Gehäuseteil 10 am zweiten Gehäuseteil 20 angeordnet ist, wie es in den Figuren 1b, 2b, 3b und 4b zu erkennen ist. Über den Kontaktabschnitt K kann das Federelement 14 direkt auf den Sperrbolzen 11 einwirken. Der Punkt, wo der Kontaktabschnitt K abgewinkelt ist, definiert eine konstante Schenkellänge bzw. einen konstanten Hebelarm am ersten Hebelarmabschnitt D1 des Federelements 14, mit dem das Federelement 14 auf den Sperrbolzen 11 einwirken kann. Der Kontaktabschnitt 14 liegt der Länge nach am Anschlagabschnitt A des Sperrbolzens 11 an und stellt somit eine stabile Auflage des Federelements 14 am Sperrbolzen 11 her. Somit kann eine stabile Drehmomentübertragung zwischen dem Federelement 14 und dem Sperrbolzen 11 realisiert werden. Der Kontaktabschnitt K des Federelements 14 ist verschiebbar entlang des Anschlagabschnitts A des Sperrbolzens 11 führbar, wenn der Sperrbolzen 11 zwischen der Verriegelungsposition VP und der Entriegelungsposition EP bewegt wird. Dadurch kann ein Kontakt zwischen dem drehbaren Kontaktabschnitt K und dem längsverschieblichen Sperrbolzen 11 bei einem konstanten Hebelarm am Kontaktabschnitt K aufrechterhalten werden.

Wie es die Figuren 1a bis 1c und 2a bis 2c außerdem zeigen, kann am ersten Gehäuseteil 10 eine, bspw. bogenförmige oder kreisförmige, Führungsnut 15 ausgebildet sein, um den Kontaktabschnitt K, insbesondere den sperrbolzenseitigen Endpunkt E1, des Federelements 14 bei der Drehbewegung zu unterstützen, während der Sperrbolzen 11 zwischen der Verriegelungsposition VP und der Entriegelungsposition EP längsverschieblich bewegt wird. Durch die Führungsnut 15 kann die Bewegung des ersten Hebelarmabschnitts D1 stabilisiert werden.

Zudem zeigen die Figuren 1a bis 1c und 2a bis 2c, dass der Anschlagabschnitt A am Sperrbolzen 11, an welchem das Federelement 14, insbesondere der Kontaktabschnitt K des Federelements 14 federelastisch zur Auflage kommt, schräg zu einer Hubrichtung H des Sperrbolzens 11 ausgerichtet ist. Durch die Schräge am Anschlagabschnitt A kann die Drehbewegung des Federelements 14 mit einer Hubbewegung des Sperrbolzens 11 synchronisiert werden.

Die Figuren 3a, 3b, 4a und 4b zeigen eine weitere mögliche Ausführungsform einer Sperrvorrichtung 100 im Sinne der Erfindung. Dabei weist das Federelement 14 einen geraden ersten Hebelarmabschnitt D1 auf, welcher an einem, vorzugsweise vorsprungartig abstehenden, Stift 19 des Sperrbolzens 11 federelastisch zur Auflage kommt, wenn der erste Gehäuseteil 10 am zweiten Gehäuseteil 20 angeordnet ist. Über den Stift 19 kann das Federelement 14 indirekt auf den Sperrbolzen 11 einwirken. Mit dem Stift 19 am Sperrbolzen 11 kann ein konstanter Drehmomenteinleitungspunkt am Sperrbolzen 11 bereitgestellt werden, über welchen das Federelement 14 stabil, kippsicher und zuverlässig auf den Sperrbolzen 11 einwirken kann. Der Stift 19 dient somit als ein Übertragungsglied zwischen dem Federelement 14 und dem Sperrbolzen 11. Dadurch kann der Stift 19 mehr Montagefreiheit ermöglichen, um den Bauraumanforderungen in der Sperrvorrichtung 100 flexibel zu entsprechen. Ferner ist es möglich, dass der Stift 19 am Sperrbolzen 11 und der Sperrbolzen 11 selbst als ein monolithisches und/oder materialeinheitliches Bauteil, bspw. ein bspw. Spritzgussteil, bereitgestellt wird. Weiterhin ist es möglich, dass der Stift 19 nachträglich am Sperrbolzen 11 montiert wird. Damit ist sogar eine Aufrüstung von herkömmlichen Sperrvorrichtungen möglich.

Der Stift 19 wird entlang des ersten Hebelarmabschnitts D1 des Federelements 14 geführt, wenn der Sperrbolzen 11 zwischen der Verriegelungsposition VP und der Entriegelungsposition EP bewegt wird. Das Federelement 14 wirkt dabei mit einem veränderlichen Hebel auf den Sperrbolzen 11. Somit kann der Sperrbolzen 11 in der Entriegelungsposition EP mit einer größeren Kraft beaufschlagt werden als in der Verriegelungsposition VP, um sicherzustellen, dass der Sperrbolzen 11 nach dem Abstellen des Kraftfahrzeugs die Verriegelungsposition VP sicher erreicht.

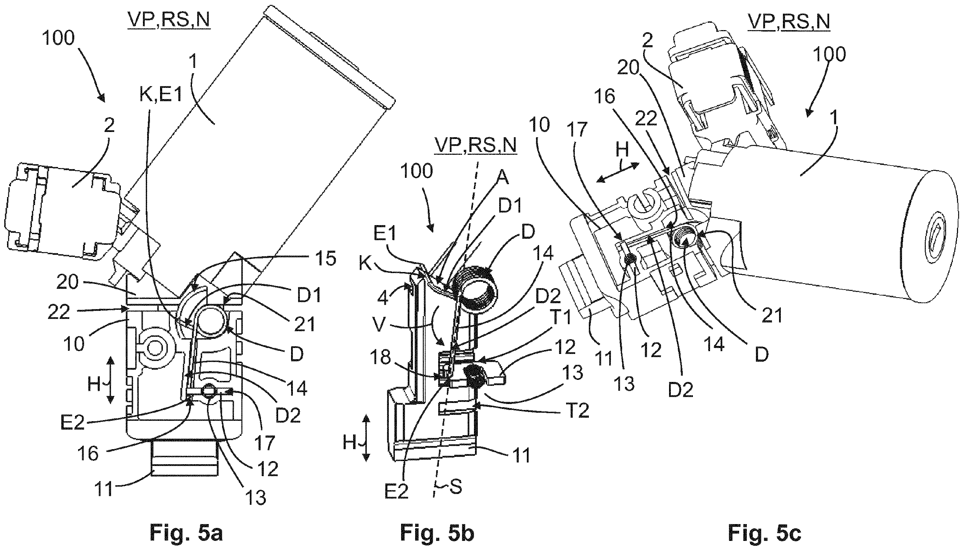

Mithilfe der Figuren 5a bis 8c sowie 9a bis 12c wird ein erfindungsgemäßes Verfahren zum Sichern eines Sperrbolzens 11 einer Sperrvorrichtung 100 erklärt, die wie oben beschrieben ausgebildet sein kann.

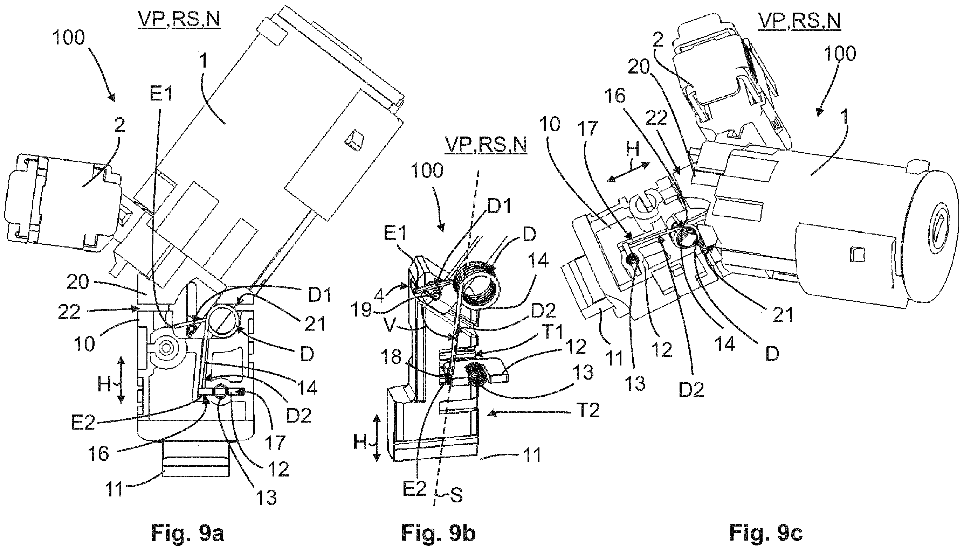

Die Figuren 5a bis 5c und 9a bis 9c zeigen die Sperrvorrichtung 100 gemäß zwei oben beschriebenen Ausführungsbeispielen im Normalbetrieb N.

Die Figuren 6a bis 6c und 10a bis 10c zeigen den ersten Verfahrensschritt:
a) Ändern einer Anordnung eines ersten Gehäuseteils 10 relativ zum zweiten Gehäuseteil 20.

Eine Änderung der Anordnung des ersten Gehäuseteils 10 relativ zum zweiten Gehäuseteil 20 kann durch eine Manipulation, einen Aufbruchsversuch und/oder durch ein Trennen des zweiten Gehäuseteils 20 vom ersten Gehäuseteil 10 gebildet sein. Da das separierbare Bauelement 2 zum zweiten Gehäuseteil 20 zählt, kann eine Änderung der Anordnung des zweiten Gehäuseteils 20 relativ zum ersten Gehäuseteil 10 auch oder insbesondere durch eine Manipulation und/oder durch ein Entfernen des separierbaren Bauelementes 2 hervorgerufen werden.

Dabei wird an einer Sollbruchstelle 22 zwischen dem ersten Gehäuseteil 10 und dem zweiten Gehäuseteil 20 ein Spalt 23 gebildet. Ein separierbares Bauelement 2 ist angrenzend an die Sollbruchstelle 22 angeordnet, sodass durch eine Manipulation und/oder durch ein Entfernen des separierbaren Bauelements 2 der Spalt 23 ebenfalls gebildet werden kann. Die Sollbruchstelle 22 dient dazu, dass bei einer Manipulation des ersten Gehäuseteils 10 und/oder des zweiten Gehäuseteils 20 und/oder des separierbaren Bauelements 2 eine Rückfederung R des Federelements 14 zur Freigabe des Sicherungselements 12 ermöglicht wird. Eine unberechtigte Person kann bspw. durch eine Stoßeinwirkung oder ein Schneidwerkzeug versuchen, den zweiten Gehäuseteil 20 abzunehmen, um sich einen Zugang zum Sperrbolzen 11 im ersten Gehäuseteil 10 zu verschaffen. Beim geöffneten ersten Gehäuseteil 10 ist der Sperrbolzen 11 unberechtigten Manipulationen ausgesetzt. Durch die Sollbruchstelle 22 wird jedoch das Federelement 14 freigegeben, um seine federelastische Vorspannung V durch eine Rückfederung R abzubauen, das Sicherungselement 12 freizulassen und somit den Sperrbolzen 11 zu arretieren. Das Sicherungselement 12 befindet sich so weit unten im ersten Gehäuseteil 10, dass sogar durch ein Öffnen des ersten Gehäuseteils 10 das Sicherungselement 12 nicht erreichbar ist und der Sperrbolzen 11 nicht manipuliert werden kann. Ein Diebstahl des Kraftfahrzeugs durch eine unberechtigte Person kann somit wirksam verhindert werden.

Die Figuren 7a bis 7c und 11a bi 11c zeigen einen nächsten Verfahrensschritt, bei welchem eine Rückfederung R des Federelements 14 erfolgt:
b) Überführen des Federelements 14 entlang einer Entsicherungsrichtung S zum Entsichern des Sicherungselements 12.

Wenn das Federelement 14 hochgesprungen ist, ist das Sicherungselement 12 frei und kann unter Einwirkung der Sicherungsfeder 13 aus der Rückzugsstellung RS in die Eingriffsstellung ES überführt werden, wie es die Figuren 8a bis 8c und 12a bis 12c zeigen.

Die Figuren 8a bis 8c und 12a bis 12c veranschaulichen den nächsten Verfahrensschritt:
c) Überführen des Sicherungselements 12 entlang einer Eingriffsrichtung E aus der Rückzugsstellung RS in die Eingriffsstellung ES zum Arretieren des Sperrbolzens 11.

Durch die oben beschriebene Sperrvorrichtung 100 und das Verfahren kann ein zuverlässiger und sicherer Aufbruchsschutz für den Sperrbolzen 11 bereitgestellt werden.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung/Ansprüche zu verlassen.

### Bezugszeichenliste

- 100: Sperrvorrichtung

- 10: erster Gehäuseteil
- 11: Sperrbolzen
- 12: Sicherungselement
- 13: Sicherungsfeder
- 14: Federelement
- 15: Führungsnut
- 16: Aufnahmebohrung
- 17: Montageöffnung
- 18: Halteöffnung
- 19: Stift

- 20: zweiter Gehäuseteil
- 21: Halteabschnitt
- 22: Sollbruchstelle
- 23: Spalt

- 1: Schließzylinder
- 2: separierbares Bauelement
- 3: Mitnehmerelement
- 4: Betätigungsführung

- A: Anschlagabschnitt des Sperrbolzens
- K: Kontaktabschnitt des Federelementes

- D: Stützabschnitt
- D1: erster Hebelarmabschnitt
- D2: zweiter Hebelarmabschnitt

- E1: sperrbolzenseitiger Endpunkt
- E2: sicherungselementseitiger Endpunkt

- H: Hubrichtung
- N: Normalbetrieb
- R: Rückfederung
- S: Entsicherungsrichtung

- T1: Sperrnut
- T2: Sperrnut

- V: federelastische Vorspannung

- EP: Entriegelungsposition
- VP: Verriegelungsposition

- E: Eingriffsrichtung

- ES: Eingriffsstellung
- RS: Rückzugsstellung

## Patentansprüche

1. Sperrvorrichtung (100) zum Sperren eines funktionswesentlichen Bauteils eines Kraftfahrzeugs, insbesondere einer Lenkspindel, mit
einem ersten Gehäuseteil (10), in welchem ein Sperrbolzen (11) beweglich zwischen einer Verriegelungsposition (VP) zum Verriegeln des funktionswesentlichen Bauteils und einer Entriegelungsposition (EP) zum Freigeben des funktionswesentlichen Bauteils aufgenommen ist,
einem zweiten Gehäuseteil (20), in welchem Mittel zur Bewegung des Sperrbolzens (11) zwischen der Verriegelungsposition (VP) und der Entriegelungsposition (EP) aufgenommen sind,
einem Sicherungselement (12), das in einer Eingriffsstellung (ES) eine Bewegung des Sperrbolzens (11) verhindert und in einer Rückzugsstellung (RS) eine Bewegung des Sperrbolzens (11) freigibt,
und einem Federelement (14), welches das Sicherungselement (12) in der Rückzugsstellung (RS) mithilfe einer federelastischen Vorspannung (V) hält, wenn der erste Gehäuseteil (10) am zweiten Gehäuseteil (20) angeordnet ist,
und in die Eingriffsstellung (ES) durch eine Rückfederung (R) freigibt, wenn der erste Gehäuseteil (10) in seiner Anordnung zum zweiten Gehäuseteil (20) verändert wird,
**dadurch gekennzeichnet,**
**dass** das Federelement (14) am Sperrbolzen (11) abgestützt ist und den Sperrbolzen (11) aus der Entriegelungsposition (EP) in die Verriegelungsposition (VP) durch eine federelastische Vorspannung (V) beaufschlagt.

2. Sperrvorrichtung (100) nach Anspruch 1,
**dadurch gekennzeichnet,**
**dass** das Federelement (14) in Form einer Rotationsfeder, insbesondere einer Drehfeder, ausgebildet ist,
wobei insbesondere das Federelement (14) aus einem Federdraht ausgebildet ist.

3. Sperrvorrichtung (100) nach Anspruch 1 oder 2,
**dadurch gekennzeichnet,**
**dass** das Federelement (14) einen, insbesondere abgewinkelten, Kontaktabschnitt (K) aufweist, welcher an einem Anschlagabschnitt (A) des Sperrbolzens (11) federelastisch zur Auflage kommt, wenn der erste Gehäuseteil (10) am zweiten Gehäuseteil (20) angeordnet ist,
wobei insbesondere ein Kontaktabschnitt (K) des Federelements (14) verschiebbar entlang eines Anschlagabschnitts (A) des Sperrbolzens (11) führbar ist, wenn der Sperrbolzen (11) zwischen der Verriegelungsposition (VP) und der Entriegelungsposition (EP) bewegt wird.

4. Sperrvorrichtung (100) nach einem der vorhergehenden Ansprüche,
**dadurch gekennzeichnet,**
**dass** das Federelement (14) einen ersten Hebelarmabschnitt (D1) aufweist, welcher an einem, vorzugsweise vorsprungartig abstehenden, Stift (19) des Sperrbolzens (11) federelastisch zur Auflage kommt, wenn der erste Gehäuseteil (10) am zweiten Gehäuseteil (20) angeordnet ist,
wobei insbesondere ein Stift (19) des Sperrbolzens (11) verschiebbar entlang eines ersten Hebelarmabschnitts (D1) des Federelements (14) führbar ist, wenn der Sperrbolzen (11) zwischen der Verriegelungsposition (VP) und der Entriegelungsposition (EP) bewegt wird.

5. Sperrvorrichtung (100) nach einem der vorhergehenden Ansprüche,
**dadurch gekennzeichnet,**
**dass** zwischen dem ersten Gehäuseteil (10) und dem zweiten Gehäuseteil (20) eine Sollbruchstelle (22) vorgesehen ist, um bei einer Manipulation des ersten Gehäuseteils (10) und/oder des zweiten Gehäuseteils (20) eine Rückfederung (R) des Federelements (14) zur Freigabe des Sicherungselements (12) zu ermöglichen,
wobei insbesondere am zweiten Gehäuseteil (20) ein Schließzylinder (1) zur Bewegung des Sperrbolzens (11) im ersten Gehäuseteil (10) angeordnet ist, welcher mit einem Schlüssel, vorzugsweise durch Drücken und/oder Drehen, betätigbar ist.

6. Sperrvorrichtung (100) nach einem der vorhergehenden Ansprüche,
**dadurch gekennzeichnet,**
**dass** am ersten Gehäuseteil (10) eine Führungsnut (15) ausgebildet ist, um einen sperrbolzenseitigen Endpunkt (E1) des Federelements (14) bei der Bewegung des Sperrbolzens (11) zwischen der Verriegelungsposition (VP) und der Entriegelungsposition (EP), vorzugsweise drehbar, zu führen,
und/oder dass ein Anschlagabschnitt (A) des Sperrbolzens (11), an welchem das Federelement (14) federelastisch zur Auflage kommt, schräg zu einer Hubrichtung (H) des Sperrbolzens (11) ausgerichtet ist.

7. Sperrvorrichtung (100) nach einem der vorhergehenden Ansprüche,
**dadurch gekennzeichnet,**
**dass** der Sperrbolzen (11) mindestens eine, vorzugsweise mehrstufige, Sperrnut (T1, T2) aufweist, in die das Sicherungselement (12) in der Eingriffsstellung (ES) zur Sperrung des Sperrbolzens (11) verrastbar ist, um eine Bewegung des Sperrbolzens (11) zu verhindern.

8. Sperrvorrichtung (100) nach einem der vorhergehenden Ansprüche,
**dadurch gekennzeichnet,**
**dass** das Federelement (14) einen sperrbolzenseitigen Endpunkt (E1) und einen sicherungselementseitigen Endpunkt (E2) aufweist,
wobei zwischen dem sperrbolzenseitigen Endpunkt (E1) und dem sicherungselementseitigen Endpunkt (E2) ein, vorzugsweise zweiseitiger und bevorzugt winkelförmiger, Hebel ausgebildet ist,
wobei insbesondere der Hebel eine Lastseite im Wesentlichen quer zu einer Hubrichtung (H) des Sperrbolzens (11) aufweist, um eine federelastische Vorspannung (V) auf den Sperrbolzen zu übertragen,
und/oder wobei der Hebel eine Kraftseite entlang einer Entsicherungsrichtung (S) aufweist, um bei einer Manipulation des ersten Gehäuseteils (10) und/oder des zweiten Gehäuseteils (20) eine Rückfederung (R) des Federelements (14) zur Freigabe des Sicherungselements (12) zu ermöglichen.

9. Sperrvorrichtung (100) nach einem der vorhergehenden Ansprüche,
**dadurch gekennzeichnet,**
**dass** das Federelement (14) einen ersten Hebelarmabschnitt (D1) zum Abstützen einer federelastischen Vorspannung (V) am Sperrbolzen (11) und einen zweiten Hebelarmabschnitt (D2) zum Halten des Sicherungselements (12) in der Rückzugsstellung (RS) aufweist, wenn der erste Gehäuseteil (10) am zweiten Gehäuseteil (20) angeordnet ist,
wobei insbesondere der erste Hebelarmabschnitt (D1) kürzer ausgebildet ist als der zweite Hebelarmabschnitt (D2).

10. Sperrvorrichtung (100) nach einem der vorhergehenden Ansprüche,
**dadurch gekennzeichnet,**
**dass** ein erster Hebelarmabschnitt (D1) des Federelements (14) im Wesentlichen quer zu einer Hubrichtung (H) des Sperrbolzens (11) ausgerichtet ist, wenn sich der Sperrbolzen (11) in der Verriegelungsposition (VP) befindet, und unter einem spitzen Winkel zur Hubrichtung (H) des Sperrbolzens (11), wenn sich der Sperrbolzen (11) in der Entriegelungsposition (EP) befindet,
wobei insbesondere ein zweiter Hebelarmabschnitt (D2) des Federelements (14) im Wesentlichen entlang der Hubrichtung (H) des Sperrbolzens (11) in einer Aufnahmebohrung (16) im ersten Gehäuseteil (10) aufgenommen ist.

11. Sperrvorrichtung (100) nach einem der vorhergehenden Ansprüche,
**dadurch gekennzeichnet,**
**dass** das Federelement (14) vorgespannt zwischen dem ersten Gehäuseteil (10) und dem zweiten Gehäuseteil (20) aufgenommen ist, wenn der erste Gehäuseteil (10) am zweiten Gehäuseteil (20) angeordnet ist,
wobei insbesondere das Federelement (14), bevorzugt ein zweiter Hebelarmabschnitt (D2) des Federelements (14), im Wesentlichen linear verschiebbar ist, wenn der erste Gehäuseteil (10) in seiner Anordnung zum zweiten Gehäuseteil (20) verändert wird.

12. Sperrvorrichtung (100) nach einem der vorhergehenden Ansprüche,
**dadurch gekennzeichnet,**
**dass** das Federelement (14), insbesondere zwischen einem ersten Hebelarmabschnitt (D1) und einem zweiten Hebelarmabschnitt (D2), mindestens einen Stützabschnitt (D) aufweist, welcher am ersten Gehäuseteil (10) und/oder am zweiten Gehäuseteil (20) zur Auflage kommt, wenn der erste Gehäuseteil (10) am zweiten Gehäuseteil (20) angeordnet ist, wobei der Stützabschnitt (D) freigegeben wird, wenn der erste Gehäuseteil (10) in seiner Anordnung zum zweiten Gehäuseteil (20) verändert wird.

13. Sperrvorrichtung (100) nach einem der vorhergehenden Ansprüche,
**dadurch gekennzeichnet,**
**dass** der erste Gehäuseteil (10) eine Montageöffnung (17), vorzugsweise in Form eines Montageschlitzes, für das Sicherungselement (12) aufweist, um das Sicherungselement (12) im Wesentlichen quer zu einer Hubrichtung (H) des Sperrbolzens (11) aufzunehmen,
wobei insbesondere eine Sicherungsfeder (13) vorgesehen ist, um das Sicherungselement (12) aus der Rückzugsstellung (RS) in die Eingriffsstellung (ES) im Wesentlichen quer zu einer Hubrichtung (H) zu beaufschlagen,
und/oder wobei bevorzugt das Sicherungselement (12) in Form eines Plättchens, vorzugsweise aus Federstahl, ausgebildet ist.

14. Sperrvorrichtung (100) nach einem der vorhergehenden Ansprüche,
**dadurch gekennzeichnet,**
**dass** am zweiten Gehäuseteil (20) ein separierbares Bauelement (2) angeordnet ist, wobei das separierbare Bauelement (2) vorzugsweise an eine Sollbruchstelle (22) zwischen dem ersten Gehäuseteil (10) und dem zweiten Gehäuseteil (20) angrenzt, und/oder wobei insbesondere das separierbare Bauelement (2) ein elektrisches Schalterelement ist.

15. Verfahren zum Sichern eines Sperrbolzens (11) einer Sperrvorrichtung (100) nach einem der vorhergehenden Ansprüche, die mit
einem ersten Gehäuseteil (10), in welchem ein Sperrbolzen (11) beweglich zwischen einer Verriegelungsposition (VP) zum Verriegeln des funktionswesentlichen Bauteils und einer Entriegelungsposition (EP) zum Freigeben des funktionswesentlichen Bauteils aufgenommen ist,
einem zweiten Gehäuseteil (20), in welchem Mittel zur Bewegung des Sperrbolzens (11) zwischen der Verriegelungsposition (VP) und der Entriegelungsposition (EP) aufgenommen sind,
einem Sicherungselement (12), das in einer Eingriffsstellung (ES) eine Bewegung des Sperrbolzens (11) verhindert und in einer Rückzugsstellung (RS) eine Bewegung des Sperrbolzens (11) freigibt,
und einem Federelement (14) ausgeführt ist, welches am Sperrbolzen (11) abgestützt ist und den Sperrbolzen (11) aus der Entriegelungsposition (EP) in die Verriegelungsposition (VP) durch eine federelastische Vorspannung (V) beaufschlagt,
**dadurch gekennzeichnet,**
**dass** das Verfahren folgende Schritte aufweist:
a) Ändern einer Anordnung des ersten Gehäuseteils (10) relativ zum zweiten Gehäuseteil (20),
b) Überführen des Federelements (14) entlang einer Entsicherungsrichtung (S) zum Entsichern des Sicherungselements (12),
c) Überführen des Sicherungselements (12) entlang einer Eingriffsrichtung (E) aus der Rückzugsstellung (RS) in die Eingriffsstellung (ES) zum Arretieren des Sperrbolzens (11).

## Claims

1. Blocking device (100) for locking an essential functional component of a motor vehicle, in particular a steering shaft, with
a first housing part (10) in which a blocking bolt (11) is movably received between a locking position (VP) for locking the functionally essential component and an unlocking position (EP) for releasing the functionally essential component,
a second housing part (20) in which means for moving the blocking bolt (11) between the locking position (VP) and the unlocking position (EP) are accommodated,
a securing element (12) which in an engagement position (ES) prevents movement of the blocking bolt (11) and in a retracted position (RS) releases movement of the blocking bolt (11),
and a spring element (14) which supports the securing element (12) in the retracted position (RS) by means of a spring-elastic pretension (V) when the first housing part (10) is arranged on the second housing part (20),
and releases it into the engagement position (ES) by means of a springback (R) when the first housing part (10) is changed in its arrangement relative to the second housing part (20),
**characterized in**
**that** the spring element (14) is supported on the blocking bolt (11) and acts on the blocking bolt (11) from the unlocked position (EP) into the locking position (VP) by means of a spring-elastic prestress (V).

2. Blocking device (100) according to claim 1,
**characterized in**
**in that** the spring element (14) is designed in the form of a rotational spring, in particular a torsion spring,
wherein in particular the spring element (14) is formed from a spring wire.

3. Blocking device (100) according to claim 1 or 2,
**characterized in**
**that** the spring element (14) has a, in particular angled, contact section (K) which comes to rest resiliently on a stop section (A) of the locking bolt (11) when the first housing part (10) is arranged on the second housing part (20),
wherein in particular a contact portion (K) of the spring element (14) can be guided displaceably along a stop portion (A) of the blocking bolt (11) when the blocking bolt (11) is moved between the locking position (VP) and the unlocking position (EP).

4. Blocking device (100) according to any one of the preceding claims,
**characterized in**
**that** the spring element (14) has a first lever arm section (D1) which comes to rest resiliently on a pin (19), preferably projecting in a projection-like manner, of the locking bolt (11) when the first housing part (10) is arranged on the second housing part (20),
wherein in particular a pin (19) of the blocking bolt (11) can be guided displaceably along a first lever arm portion (D1) of the spring element (14) when the locking bolt (11) is moved between the locking position (VP) and the unlocking position (EP).

5. Blocking device (100) according to any one of the preceding claims,
**characterized in**
**that** a predetermined breaking point (22) is provided between the first housing part (10) and the second housing part (20) in order to allow a springback (R) of the spring element (14) to release the securing element (12) in the event of manipulation of the first housing part (10) and/or the second housing part (20),
wherein, in particular, a locking cylinder (1) for moving the blocking bolt (11) in the first housing part (10) is arranged on the second housing part (20), which cylinder can be actuated with a key, preferably by pressing and/or turning.

6. Blocking device (100) according to any one of the preceding claims,
**characterized in**
**that** a guide groove (15) is formed on the first housing part (10) in order to guide, preferably rotatably, an end point (E1) of the spring element (14) on the locking bolt side when the locking bolt (11) moves between the locking position (VP) and the unlocking position (EP), and/or in that a stop section (A) of the blocking bolt (11), on which the spring element (14) comes to rest in a spring-elastic manner, is aligned obliquely with respect to a stroke direction (H) of the blocking bolt (11).

7. Blocking device (100) according to any one of the preceding claims,
**characterized in**
**that** the blocking bolt (11) has at least one, preferably multi-stage, locking groove (T1, T2) into which the securing element (12) can be latched in the engagement position (ES) for blocking the blocking bolt (11) in order to prevent movement of the blocking bolt (11).

8. Blocking device (100) according to any one of the preceding claims,
**characterized in**
**that** the spring element (14) has an end point (E1) on the blocking bolt side and an end point (E2) on the securing element side,
wherein between the end point (E1) on the blocking bolt side and the end point (E2) on the fuse-element side, a lever, preferably two-sided and preferably angled, is formed, wherein in particular the lever has a load side substantially transverse to a stroke direction (H) of the blocking bolt (11) in order to transmit a spring-elastic pretension (V) to the blocking bolt,
and/or wherein the lever has a force side along an safety-off-direction (S) in order to permit a springback (R) of the spring element (14) to release the securing element (12) when the first housing part (10) and/or the second housing part (20) is manipulated.

9. Blocking device (100) according to any one of the preceding claims,
**characterized in**
**that** the spring element (14) has a first lever-arm section (D1) for supporting a spring-elastic prestress (V) on the blocking bolt (11) and a second lever-arm section (D2) for holding the securing element (12) in the retracted position (RS) when the first housing part (10) is arranged on the second housing part (20),
wherein in particular the first lever arm section (D1) is designed shorter than the second lever arm section (D2).

10. Blocking device (100) according to any one of the preceding claims,
**characterized in**
**that** a first lever arm portion (D1) of the spring element (14) is oriented substantially transverse to a stroke direction (H) of the blocking bolt (11) when the blocking bolt (11) is in the locking position (VP) and at an acute angle to the stroke direction (H) of the blocking bolt (11) when the blocking bolt (11) is in the unlocking position (EP),
wherein in particular a second lever arm section (D2) of the spring element (14) is received in a receiving bore (16) in the first housing part (10) substantially along the stroke direction (H) of the blocking bolt (11).

11. Blocking device (100) according to any one of the preceding claims,
**characterized in**
**that** the spring element (14) is received in a pretensioned manner between the first housing part (10) and the second housing part (20) when the first housing part (10) is arranged on the second housing part (20),
wherein in particular the spring element (14), preferably a second lever arm section (D2) of the spring element (14), is substantially linearly displaceable when the first housing part (10) is changed in its arrangement relative to the second housing part (20).

12. Blocking device (100) according to any one of the preceding claims,
**characterized in**
**that** the spring element (14), in particular between a first lever arm section (D1) and a second lever arm section (D2), has at least one support section (D) which comes to rest on the first housing part (10) and/or on the second housing part (20) when the first housing part (10) is arranged on the second housing part (20), the support section (D) being released when the first housing part (10) is changed in its arrangement relative to the second housing part (20).

13. Blocking device (100) according to any one of the preceding claims,
**characterized in**
**that** the first housing part (10) has a mounting opening (17), preferably in the form of a mounting slot, for the securing element (12) in order to receive the securing element (12) essentially transversely with respect to a lifting direction (H) of the blocking bolt (11), wherein in particular a securing spring (13) is provided to act on the securing element (12) from the retracted position (RS) into the engaged position (ES) substantially transversely to a stroke direction (H),
and/or wherein preferably the securing element (12) is designed in the form of a small plate, preferably of spring steel.

14. Blocking device (100) according to any one of the preceding claims,
**characterized in**
**that** a separable component (2) is arranged on the second housing part (20), the separable component (2) preferably adjoining a predetermined breaking point (22) between the first housing part (10) and the second housing part (20), and/or in particular the separable component (2) being an electrical switch element.

15. Method of securing a blocking bolt (11) of a blocking device (100) in accordance with any of the preceding claims, designed with
a first housing part (10) in which a blocking bolt (11) is movably received between a locking position (VP) for locking the functionally essential component and an unlocking position (EP) for releasing the functionally essential component,
a second housing part (20) in which means for moving the blocking bolt (11) between the locking position (VP) and the unlocking position (EP) are accommodated,
a securing element (12) which in an engagement position (ES) prevents movement of the blocking bolt (11) and in a retracted position (RS) releases movement of the blocking bolt (11),
and a spring element (14), which is supported on the blocking bolt (11) and acts upon the blocking bolt (11) from the unlocked position (EP) into the locking position (VP) by means of a spring-elastic prestress (V),
**characterized in**
**that** the method comprises the following steps:
a) changing an arrangement of the first housing part (10) relative to the second housing part (20),
b) transferring the spring element (14) along a safety-off-direction (S) for unlocking the securing element (12),
c) transferring the securing element (12) along an engagement direction (E) from the retracted position (RS) into the engagement position (ES) for fastening the blocking bolt (11).

## Revendications

1. Dispositif de blocage (100) destiné à bloquer un composant fonctionnel essentiel d'un véhicule automobile, notamment un arbre de direction, avec
une première partie de boîtier (10) dans laquelle un goujon de blocage (11) est reçu de manière mobile entre une position de verrouillage (VP) pour verrouiller le composant fonctionnel essentiel et une position de déverrouillage (EP) pour libérer le composant fonctionnel essentiel,
une deuxième partie de boîtier (20) dans laquelle sont logés les moyens permettant de déplacer le goujon de blocage (11) entre la position de verrouillage (VP) et la position de déverrouillage (EP),
un élément de sécurité (12) qui, dans une position d'engagement (ES), empêche le mouvement du goujon de blocage (11) et, dans une position rétractée (RS), libère le mouvement du goujon de blocage (11),
et un élément de ressort (14) qui soutient l'élément de sécurité (12) en position rétractée (RS) au moyen d'une précontrainte élastique (V) lorsque la première partie du boîtier (10) est disposée sur la deuxième partie du boîtier (20),
et la libère en position d'engagement (ES) au moyen d'un ressort de rappel (R) lorsque la première partie du boîtier (10) est modifiée dans sa disposition par rapport à la deuxième partie du boîtier (20),
**caractérise en ce**
**que** l'élément de ressort (14) s'appuie sur le goujon de blocage (11) et agit sur le goujon de blocage (11) de la position déverrouillée (EP) à la position de verrouillage (VP) au moyen d'une précontrainte élastique (V).

2. Dispositif de blocage (100) selon la revendication 1,
**caractérise en ce**
**que** l'élément de ressort (14) est conçu sous la forme d'un ressort de rotation, en particulier un ressort de torsion,
dans lequel l'élément de ressort (14) est notamment formé d'un fil de ressort.

3. Dispositif de blocage (100) selon les revendications 1 ou 2,
**caractérise en ce**
**que** l'élément de ressort (14) présente une section de contact (K), notamment coudée, qui vient s'appuyer élastiquement sur une section de butée (A) du goujon de blocage (11) lorsque la première partie de boîtier (10) est disposée sur la deuxième partie de boîtier (20),
dans lequel, en particulier, une partie de contact (K) de l'élément de ressort (14) peut être guidée de manière déplaçable le long d'une partie de butée (A) du goujon de blocage (11) lorsque le goujon de blocage (11) est déplacé entre la position de verrouillage (VP) et la position de déverrouillage (EP).

4. Dispositif de blocage (100) selon l'une quelconque des revendications précédentes,
**caractérise en ce**
**que** l'élément de ressort (14) présente une première section de bras de levier (D1) qui vient s'appuyer élastiquement sur un axe (19), de préférence en saillie, du goujon de verrouillage (11) lorsque la première partie de boîtier (10) est disposée sur la deuxième partie de boîtier (20),
dans lequel en particulier une goupille (19) du boulon de verrouillage (11) peut être guidée de manière déplaçable le long d'une première partie de bras de levier (D1) de l'élément de ressort (14) lorsque le goujon de blocage (11) est déplacé entre la position de verrouillage (VP) et la position de déverrouillage (EP).

5. Dispositif de blocage (100) selon l'une quelconque des revendications précédentes,
**caractérise en ce**
**qu'**un point de rupture prédéterminé (22) est prévu entre la première partie de boîtier (10) et la deuxième partie de boîtier (20) afin de permettre un retour élastique (R) de l'élément de ressort (14) pour libérer l'élément de fixation (12) en cas de manipulation de la première partie de boîtier (10) et/ou de la deuxième partie de boîtier (20),
dans lequel, en particulier, un cylindre de fermeture (1) pour déplacer le goujon de blocage (11) dans la première partie de boîtier (10) est disposé sur la deuxième partie de boîtier (20), lequel cylindre peut être actionné avec une clé, de préférence par pression et/ou rotation.

6. Dispositif de blocage (100) selon l'une quelconque des revendications précédentes,
**caractérise en ce**
**qu'**une rainure de guidage (15) est formée sur la première partie du boîtier (10) afin de guider, de préférence de manière rotative, un point d'extrémité (E1) de l'élément de ressort (14) du côté du goujon de blocage lorsque le goujon de blocage (11) se déplace entre la position de verrouillage (VP) et la position de déverrouillage (EP),
et/ou en ce qu'une section de butée (A) du goujon de blocage (11), sur laquelle l'élément de ressort (14) vient s'appuyer de manière élastique, est orientée obliquement par rapport à une direction de course (H) du goujon de blocage (11).

7. Dispositif de blocage (100) selon l'une quelconque des revendications précédentes,
**caractérise en ce**
**que** le goujon de blocage (11) présente au moins une rainure de verrouillage (T1, T2), de préférence à plusieurs étages, dans laquelle l'élément de sécurité (12) peut être encliqueté dans la position d'engagement (ES) pour le verrouillage du goujon de blocage (11) afin d'empêcher le mouvement du goujon de blocage (11).

8. Dispositif de blocage (100) selon l'une quelconque des revendications précédentes,
**caractérise en ce**
**que** l'élément de ressort (14) présente un point d'extrémité (E1) du côté du goujon de blocage et un point d'extrémité (E2) du côté de l'élément de fixation,
dans lequel entre le point d'extrémité (E1) du côté du boulon de verrouillage et le point d'extrémité (E2) du côté de l'élément fusible, un levier, de préférence bilatéral et de préférence coudé, est formé,
dans lequel le levier présente en particulier un côté de charge sensiblement transversal à une direction de course (H) du goujon de blocage (11) afin de transmettre une précontrainte élastique (V) au goujon de blocage,
et/ou où le levier a un côté force le long d'une direction de déverrouillage (S) afin de permettre un retour élastique (R) de l'élément de ressort (14) pour libérer l'élément de fixation (12) lorsque la première partie du boîtier (10) et/ou la deuxième partie du boîtier (20) est manipulée.

9. Dispositif de blocage (100) selon l'une quelconque des revendications précédentes,
**caractérise en ce**
**que** l'élément de ressort (14) présente une première section de bras de levier (D1) pour l'appui d'une précontrainte élastique (V) sur le goujon de blocage (11) et une deuxième section de bras de levier (D2) pour le maintien de l'élément de fixation (12) dans la position rétractée (RS) lorsque la première partie de boîtier (10) est disposée sur la deuxième partie de boîtier (20),
dans lequel, en particulier, la première section du bras de levier (D1) est conçue plus courte que la deuxième section du bras de levier (D2).

10. Dispositif de blocage (100) selon l'une quelconque des revendications précédentes,
**caractérise en ce**
**qu'**une première partie de bras de levier (D1) de l'élément de ressort (14) est orientée sensiblement transversalement à une direction de course (H) du goujon de blocage (11) lorsque le goujon de blocage (11) se trouve dans la position de verrouillage (VP) et à un angle aigu par rapport à la direction de course (H) du boulon de verrouillage (11) lorsque le goujon de blocage (11) se trouve dans la position de déverrouillage (EP),
dans lequel en particulier une deuxième section de bras de levier (D2) de l'élément de ressort (14) est reçue dans un alésage de réception (16) dans la première partie de boîtier (10) sensiblement le long de la direction de la course (H) du boulon de verrouillage (11).

11. Dispositif de blocage (100) selon l'une quelconque des revendications précédentes,
**caractérise en ce**
**que** l'élément de ressort (14) est reçu de manière précontrainte entre la première partie de boîtier (10) et la deuxième partie de boîtier (20) lorsque la première partie de boîtier (10) est disposée sur la deuxième partie de boîtier (20),
dans lequel en particulier l'élément de ressort (14), de préférence une deuxième section de bras de levier (D2) de l'élément de ressort (14), est déplaçable de manière sensiblement linéaire lorsque la première partie de boîtier (10) est modifiée dans sa disposition par rapport à la deuxième partie de boîtier (20).

12. Dispositif de blocage (100) selon l'une quelconque des revendications précédentes,
**caractérise en ce**
**que** l'élément de ressort (14), en particulier entre une première section de bras de levier (D1) et une deuxième section de bras de levier (D2), présente au moins une section d'appui (D) qui vient s'appuyer sur la première partie de boîtier (10) et/ou sur la deuxième partie de boîtier (20) lorsque la première partie de boîtier (10) est disposée sur la deuxième partie de boîtier (20), la section d'appui (D) étant libérée lorsque la première partie de boîtier (10) est modifiée dans sa disposition par rapport à la deuxième partie de boîtier (20).

13. Dispositif de blocage (100) selon l'une quelconque des revendications précédentes,
**caractérise en ce**
**que** la première partie du boîtier (10) présente une ouverture de montage (17), de préférence sous la forme d'une fente de montage, pour l'élément de fixation (12) afin de recevoir l'élément de fixation (12) essentiellement transversalement par rapport à une direction de levage (H) du boulon de verrouillage (11),
dans lequel il est prévu en particulier un ressort de sécurité (13) qui agit sur l'élément de sécurité (12) de la position rétractée (RS) à la position engagée (ES) sensiblement transversalement à une direction de course (H),
et/ou dans lequel, de préférence, l'élément de fixation (12) est conçu sous la forme d'une petite plaque, de préférence en acier à ressort.

14. Dispositif de blocage (100) selon l'une quelconque des revendications précédentes,
**caractérise en ce**
**qu'**un composant séparable (2) est disposé sur la deuxième partie de boîtier (20), le composant séparable (2) étant de préférence contigu à un point de rupture (22) entre la première partie de boîtier (10) et la deuxième partie de boîtier (20), et/ou en particulier le composant séparable (2) étant un élément de commutation électrique.

15. Méthode pour sécuriser un goujon de blocage (11) d'un dispositif de blocage (100) selon l'une quelconque des revendications précédentes, réalisé avec
une première partie de boîtier (10) dans laquelle un goujon de blocage (11) est reçu de manière mobile entre une position de verrouillage (VP) pour verrouiller le composant fonctionnel essentiel et une position de déverrouillage (EP) pour libérer le composant fonctionnel essentiel,
une deuxième partie de boîtier (20) dans laquelle sont logés les moyens permettant de déplacer le goujon de blocage (11) entre la position de verrouillage (VP) et la position de déverrouillage (EP),
un élément de sécurité (12) qui, dans une position d'engagement (ES), empêche le mouvement du goujon de blocage (11) et, dans une position rétractée (RS), libère le mouvement du goujon de blocage (11),
et un élément de ressort (14), qui s'appuie sur le goujon de blocage (11) et qui agit sur le goujon de blocage (11) de la position déverrouillée (EP) à la position de verrouillage (VP) au moyen d'une précontrainte élastique (V),
**caractérise en ce**
**que** la méthode comprend les étapes suivantes :
a) la modification de la disposition de la première partie de boîtier (10) par rapport à la deuxième partie de boîtier (20),
b) le transfert de l'élément de ressort (14) dans une direction de déverrouillage (S) pour déverrouiller l'élément de sécurité (12),
c) le transfert de l'élément de sécurité (12) le long d'une direction d'engagement (E) de la position rétractée (RS) à la position d'engagement (ES) pour le verrouillage du goujon de blocage (11).
